# EUROPÄISCHE PATENTSCHRIFT

(11) **EP 4 028 156 B1**
(45) Veröffentlichungstag und Bekanntmachung des Hinweises auf die Patenterteilung: **12.07.2023**
(21) Anmeldenummer: 20772251.3
(22) Anmeldetag: 11.09.2020
(51) Int. Cl.: B01J 19/24, B01J 4/00, B01J 19/00

(54) **VORRICHTUNG UND VERFAHREN ZUR UNTERSUCHUNG VON CHEMISCHEN PROZESSEN**
DEVICE AND METHOD FOR INVESTIGATING CHEMICAL PROCESSES
DISPOSITIF ET PROCÉDÉ POUR ÉTUDIER DES PROCESSUS CHIMIQUES

(30) Priorität: 13.09.2019 DE 102019214018
(43) Veröffentlichungstag der Anmeldung: 20.07.2022
(73) Patentinhaber: HTE GmbH The High Throughput Experimentation Company, 69123 Heidelberg (DE)
(72) Erfinder: MUELLER, Andreas, 69123 Heidelberg (DE); DEJMEK, Michael, 69123 Heidelberg (DE); PUETTMANN, Oliver, 69123 Heidelberg (DE); HIGELIN, Alexander, 69123 Heidelberg (DE); SCHNEIDER, Fabian, 69123 Heidelberg (DE); WASSERSCHAFF, Guido, 69123 Heidelberg (DE)
(86) Internationale Anmeldenummer: PCT/EP2020/075499
(87) Internationale Veröffentlichungsnummer: WO 2021/048375

(56) Entgegenhaltungen:
- EP-A1- 3 124 909
- EP-A2- 0 529 329
- EP-A2- 0 861 802
- US-A1- 2003 031 914
- US-A1- 2014 323 694
- US-A1- 2017 219 148

## Beschreibung

### Gebiet der Erfindung

Die vorliegende Erfindung betrifft eine Vorrichtung zur Untersuchung chemischer Prozesse, einen Stapelreaktor zur Untersuchung chemischer Prozesse, sowie ein Verfahren zur Untersuchung chemischer Prozesse, mit deren bzw. dessen Hilfe zeitgleich oder in einem engen zeitlichen Zusammenhang an einer großen Anzahl von funktionellen Elementen unter Variation der Prozessparameter verfahrenstechnische und materialspezifische Optimierungen vorgenommen werden können.

### Hintergrund der Erfindung

Im Bereich der Hochdurchsatzforschung besteht ein kontinuierliches Bedürfnis die durchzuführenden Tests und Prüfungen schneller und effizienter durchführen zu können. Insbesondere auf dem Gebiet der Entwicklung von Katalysatoren und der Optimierung von Prozessen ist es sehr aufwendig die zu prüfenden Komponenten in die entsprechenden Apparaturen einzubringen, um diese dann entsprechenden Prüfungen zu unterziehen. Zur Untersuchung von Katalysatoren werden Vorrichtungen und Verfahren einschließlich der erforderlichen Softwareprogramme bereitgestellt, um die Forschungsarbeiten zu verbessern und zu beschleunigen. Dadurch ist es möglich technische Prozesse mit einer hohen Genauigkeit im Labor nachzustellen. Die große Menge an Daten und die hohe Genauigkeit helfen dabei, die Anzahl an Untersuchungen zu reduzieren, die im Technikums-Maßstab durchgeführt werden. Dadurch lassen sich bei der Entwicklung von Produkten Zeit und Energie sparen.

Im Stand der Technik sind Vorrichtungen und Verfahren zur Untersuchung von chemischen Prozessen auf dem Gebiet der Hochdurchsatzforschung bereits seit mehreren Jahrzehnten bekannt. Auch ist bekannt, dass für die Durchführung der Testungen Reaktorsysteme mit unterschiedlichen baulichen Ausführungen eingesetzt werden können. So wird beispielsweise in DE 100 36 633 A1 eine Anordnung zur Testung von Katalysatoren mit blockförmigen Modulen beschrieben, bei welcher ein Reaktormodul zwischen Temperiermodulen angeordnet ist. Für die Untersuchungen werden die Reaktionskanäle mit Katalysatoren bestückt. Im Bereich der Mikroreaktortechnologie werden oftmals plattenförmig aufgebaute Reaktoren verwendet. Plattenförmige Reaktoren auf dem Gebiet der Mikroreaktortechnologie sind in WO 00/51720 beschrieben. Die Reaktoren setzen sich aus stapelförmig angeordneten Platten zusammen, wobei die einzelnen Platten unterschiedliche technische Funktionen aufweisen. Zu diesen Funktionen gehören beispielsweise Platten, in denen lochförmige Kanäle enthalten sind, in denen Katalysatoren eingebracht wird. Alternativ sind Platten vorhanden, die Mikrostrukturen als Verteilungskanäle aufweisen, die das Fluid zu dem Reaktionskanal hinleiten oder ableiten. Ein plattenförmig aufgebauter Reaktor wird in EP 1 329 258 A2 beschrieben. In WO 2019/122101 A1 wird ein Reaktorsystem für Durchflussreaktionen beschrieben, welches aus zwei Blöcken, Zwischenschichten und einer Anpressvorrichtung aufgebaut ist. Eine der Zwischenschichten umfasst ein Kanalstrukturelement, das den Reaktionskanal enthält und das eine dichtende Verbindung zu den benachbarten Schichten aufweist. Aus T. Zech, P. Claus, D. Honicke: das eine dichtende Verbindung zu den benachbarten Schichten aufweist. Aus T. Zech, P. Claus, D. Honicke: "Miniaturized reactors in combinatorial catalysis and high-throughput experimentation"; CHIMIA International Journal for Chemistry, 2002, 56. Jg., Nr. 11, S. 611-620 ist ein Mikrokanalstapelreaktor bekannt, bei dem ein Stapel Metallrahmen vorgesehen ist mit seitlich eingeschobenen Katalysatorplatte. Aus DE 101 59 189 A1 ist ein Verfahren zur Testung von Bausteinen einer Substanzbibliothek bekannt, bei dem kontinuierlich eine Testung eines Bibliotheksbausteines auf eine Performance-Eigenschaft und ein Erfassen einer Messgröße durch einen Sensor durchgeführt wird. Aus DE 602 15 198 T2 ist ein Verfahren zum Herstellen von Dichtungen zwischen verschiedenen Elementen einer herkömmlichen Brennstoffzelle oder Brennstoffzellenanordnung bekannt, um einen Verlust von Gasen und Flüssigkeiten zu verhindern, die zum Betrieb einzelner Brennstoffzellen benötigt werden. Aus DE 196 32 779 A1 ist ein Verfahren und eine Vorrichtung zum Untersuchen von chemischen Reaktionen in parallel geschalteten, miniaturisierten Reaktoren bekannt. Aus US 5 595 712 A ist eine Vorrichtung zum chemischen Mischen und Reagieren bekannt. Vorrichtungen mit Stapelplattenreaktoren sind ferner bekannt aus US 2017 219148 A1, EP 3 124 909 A1, US 2014 323694 A1, US 2003 031914 A1, EP 0 861 802 A2 und EP 0 529 329 A2.

### Zusammenfassung der Erfindung

Die vorliegende Erfindung stellt eine Vorrichtung zur Untersuchung von chemischen Prozessen gemäß der unabhängigen Ansprüche bereit, wobei weitere Ausführungsformen der Erfindung in den abhängigen Ansprüchen verkörpert werden.

Gemäß einer Ausführungsform der Erfindung wird eine Vorrichtung zur Untersuchung von chemischen Prozessen bereitgestellt, aufweisend: einen Ofen mit wenigstens einer Ofenkammer; einen Stapelplattenreaktor mit einer Mehrzahl von nebeneinanderliegenden plattenförmigen Formköperbausteinen und wenigstens einer Zuleitung für ein Edukt und wenigstens einer Ableitung für ein Produkt; und eine Anschlussvorrichtung zum Anschluss des Stapelplattenreaktors an wenigstens eine ofenseitige Zuleitung eines Eduktes und wenigstens eine ofenseitige Ableitung eines Produktes; wobei die Ofenkammer eine Aufnahmevorrichtung aufweist, die derart ausgestaltet ist, dass sie die Mehrzahl von nebeneinanderliegenden Formköperbausteinen des Stapelplattenreaktors aufnehmen kann; wobei die Mehrzahl von Formköperbausteinen des Stapelplattenreaktors in der Aufnahmevorrichtung derart gestapelt aneinander liegen, dass sie eine Mehrzahl von Kavitäten mit jeweils einem Zulauf für ein Edukt und wenigstens einem Ablauf für ein Produkt, sowie einer von einer reaktiven Vorrichtung und einer nicht reaktiven Vorrichtung aufweisen, die jeweils einen Einzelreaktor bilden; wobei die Aufnahmevorrichtung eine Pressvorrichtung aufweist, die derart ausgestaltet ist, dass sie die Mehrzahl der gestapelt aneinander liegenden Formköperbausteine des Stapelplattenreaktors in Richtung der Stapelrichtung verpressen kann; wobei die Mehrzahl von Reaktorkammern wahlweise parallel und/oder in Reihe geschaltet sein können.

Der Reaktor kann über eine Schnellwechselspannvorrichtung (SWS) mit standardisierten Einsetzkassetten verfügen. Die SWS kann eine Dehnungsausgleichsfunktion zur Erhaltung der Dichtigkeit bei Hochtemperaturreaktionen besitzen. Die SWS kann den Wechsel einzelner Kassetten im drucklosen Zustand erlauben. Jede Kassette kann galvanisch getrennt von allen benachbarten Kassetten sein. Jede Kassette kann thermisch getrennt von allen benachbarten Kassetten sein. Die SWS kann eine nicht über mehrere Kassetten verlaufenden mechanischen Verbindungen besitzen und damit das Auftreten von Leckagen, thermischen Fernwirkungen oder auch Kurzschlüssen verhindern. Die Kassetten können mit unterschiedlichen Einsätzen versehen werden für die Aufgaben Strömungsführung und Materialaufnahme sowie Parallelisierungsgrad. Es können sowohl eine als auch mehrere über entsprechende Strömungsführungen innerhalb einer Einsetzkassette miteinander verbundenen Plattenelektroden sein. Die Strömungsführer können sich von den Materialträgern unterscheiden. Die Strömungsführer können charakterisiert sein durch komplexe Strukturen zur Verteilung von Fluiden und elektrischen Strömen. Die Materialträger können so konstruiert sein, dass sie günstig in der Herstellung sind und nur wenig komplex sind. Im einfachsten Fall können das rechteckige Platten mit einseitiger Beschichtung sein. Die Materialträger können einheitliche Formate längs des kompletten Workflows (Synthese, Reaktion, Analytik) besitzen. Die Strömungsführer können einheitliche Formate innerhalb der Spannvorrichtung besitzen. Die Strömungsführungsformate können sich auch unterscheiden innerhalb der SWS, wenn der Einfluss unterschiedlicher Strömungsführungen oder auch Diffusionsschichten oder auch elektrische Kontaktierungsvarianten auf einen immer gleichen Materialträger untersucht werden soll.

Weiterhin können die Einsetzkassetten mit optisch transparenten Platten abgedeckt sein so dass diese mit einer ebenfalls in die Stapelung eingebrachten plattenartigen Lichtquelle durchleuchtet werden können um somit elektro-photo-katalytische Prozesse zu ermöglichen.

Materialträger und Strömungsführer können zu prozessspezifischen Zellen zusammengefasst werden. Beispiele sind Zellen für die Wasserelektrolyse, Zellen für die CO2 Co-Elektrolyse mit Wasser, Zellen für Membrantrennprozesse.

Zellen können außerhalb der Anlage vormontiert werden, um einen staubdichten Zusammenbau der Zellbestandteile zu ermöglichen, der erst nach Einbau in den Reaktor durch die Spannvorrichtung abgedichtet wird. Das bedeutet, dass die in der Vormontage bereits eingebauten Zelldichtungen erst zu diesem Zeitpunkt unter Druckspannung gesetzt werden können. Alle fluidischen Anschlüsse an die Zellen können mit Schnellkupplungen versehen sein, um den Ein-/ und Ausbau zu beschleunigen. Alle elektrischen Anschlussleitungen können auch steckbar ausgeführt sein. Alle fluidischen Anschlüsse an die Zellen können als elektrisch nichtleitfähige Kunststoffleitungen ausgeführt sein. Zur Verringerung der elektrischen bzw. ionischen Leitfähigkeit längs der Anschlussleitungen können diese zusätzlich in Schleifen gelegt werden. Damit einher geht eine Erhöhung des Widerstands zwischen Reaktor und Umgebung. Weiterhin können die Einsetzkassetten mit optisch transparenten Platten abgedeckt sein, so dass diese mit einer ebenfalls in die Stapelung eingebrachten plattenartigen Lichtquelle durchleuchtet werden kann, um somit elektro-photo-katalytische Prozesse zu ermöglichen.

Zusätzlich können die Elektrodenflächen der Zellen in elektrisch isolierten Untereinheiten separiert und elektrisch angeschlossen werden. Dadurch können verschiedenen Elektrodenflächen bei gleicher Zellenbaugröße flexibel realisiert werden.

Die steckbaren elektrischen Anschlüsse können so ausgeführt werden, dass Steckerkontakte in beispielsweise unterschiedlichen Höhen angebracht sind womit unterschiedlich große Elektrodenflächen leitend mit der Stromquelle innerhalb einer Zelle verbunden werden können.

Eine reaktive Vorrichtung kann als eine Vorrichtung verstanden werden, die der Durchführung von Stoffumwandlung beziehungsweise der Durchführung von chemischen Prozessen dient. Eine nicht-reaktive Vorrichtung kann als eine Vorrichtung verstanden werden, die der Durchführung von physikalischen Prozessen dient, z.B. einer Adsorption, einer Trennung, einer Aufreinigung und/oder einer Ab- oder Anreicherung von Stoffen.

Auf diese Weise können chemischen Untersuchungen zeitgleich oder in einem engen zeitlichen Zusammenhang an einer großen Anzahl von funktionellen Elementen unter Variation der Prozessparameter vorgenommen werden. Mittels Screening-Technologie wird es dem Anwender ermöglicht, in kurzen Zeiträumen Multiparameterräume mit hoher Genauigkeit und Präzision zu charakterisieren und anhand der hierbei erzielten Charakterisierungsdaten Rückschlüsse zu ziehen, wie funktionelle Elemente oder chemische Prozesse verbessert werden können. Die Verbesserung und Optimierung von technischen Prozessen ist von großer Bedeutung, da es dringend notwendig ist, die Ressourceneffizienz der chemischen Prozesse zu erhöhen und diese nach Möglichkeit zu optimieren.

Als Reaktor bzw. Einzelreaktor wird im Sinne der Erfindung eine Vorrichtung verstanden, mit der ein Edukt einer Behandlung unterzogen wird um daraus ein Produkt zu erhalten. Die Behandlung kann chemisch erfolgen, in diesem Fall mit einem reaktiven Element oder einer reaktiven Vorrichtung wie beispielsweise einem Katalysator, oder mechanisch, in diesem Fall mit einem nichtreaktiven Element wie einem Filter. Ferner kann die Behandlung elektrisch erfolgen, wobei die elektrische Behandlung sowohl durch ein reaktives Element wie beispielsweise einem galvanischen Element erfolgen kann, als auch durch ein nichtreaktives Element wie einem Kondensator, der das Edukt etwa mit einem elektrischen Feld beaufschlagt.

Eine Hauptanwendung kann in der Prozessierung von gas/flüssig Systemen liegen. Dabei kann die flüssige Phase die lonenleitfähigkeit übernehmen und den Reaktionsraum stellen, in dem gelöste oder ungelöste Gase mit Flüssigkeiten oder miteinander oder mit anderen Gasen und Flüssigkeiten reagieren. Da die Reaktion unterhalb der Siedetemperatur der beteiligten Flüssigkomponenten stattfinden muss, handelt es sich hier um Niedertemperaturreaktionen. Eine weitere Anwendung können Prozesse sein in denen alle Reaktionen in der Gasphase stattfinden. In diesem Fall kann ein poröser Festkörperelektrolyt zwischen den Elektroden die lonenleitfähigkeit übernehmen und auch als Reaktionsraum dienen. Da die Reaktion bei Temperaturen oberhalb der Siedetemperatur der beteiligten Stoffe stattfindet, handelt es sich hier um Hochtemperaturreaktionen. Heterogene nicht mischbare flüssig/flüssig Systeme können analog zu gas/flüssig Systemen prozessiert werden. Das betrifft auch die Abscheidung nach der Reaktion. Hier kann dann ein 3-Phasengemisch (flüssig/flüssig/gas) entstehen. Homogene mischbare flüssig/flüssig Systeme können analog zu reinen Gasphasensystemen bei entsprechend niedrigeren Temperaturen prozessiert werden.

Gemäß einer Ausführungsform der Erfindung ist die reaktive Vorrichtung ausgewählt aus einer Gruppe, bestehend aus einem Membranplattenreaktivelement, einem elektrochemischen Plattenreaktivelement, einem Brennstoffzellenreaktivelement, einem Elektrolysator, einem photokatalytischen Plattenreaktivelement, einem photokatalytischen Plattenelement mit integrierter LED-Quelle, einem katalytisch aktiven Plattenreaktivelement für heterogene Katalyse. Unterschiedliche reaktive Vorrichtungen in einem Stapelplattenreaktor können auch unterschiedliche Arten von reaktiven Vorrichtungen bzw. Elementen sein.

Auf diese Weise können reaktive Vorrichtungen bereitgestellt werden. Die jeweils reaktive Substanz kann dabei insbesondere durch Beschichtung der Plattenflächen, durch Tränkung der porösen Plattenoberflächen und/oder durch Einbringen von festen Partikeln in Vertiefungen in die Plattenfläche bereitgestellt werden.

Gemäß einer Ausführungsform der Erfindung kann die reaktive Vorrichtung Elemente zur Erzeugung elektromagnetischer Wellen aufweisen.

Auf diese Weise kann die Schwingungsenergie der elektromagnetischen Wellen genutzt werden zur Spaltung chemischer Bindungen in Reaktionsgemischen.

Gemäß einer Ausführungsform der Erfindung ist die reaktive Vorrichtung ausgewählt aus einer Gruppe von Elementen, die physikalisch wirkende Prozessschritte vornehmen oder ermöglichen, die die Stoffzusammensetzung ändern, insbesondere bestehend aus flächigen Abscheidern, wie Membranen oder Absorbentien oder Hohlfaserbündeln, die Membran- oder Absorbenzeigenschaften besitzen sowie festen Partikeln mit diesen Eigenschaften.

Auf diese Weise können auch alternative reaktive Vorrichtungen bereitgestellt werden.

Gemäß einer Ausführungsform der Erfindung ist eine nichtreaktive Vorrichtung ausgewählt aus einer Gruppe von Elementen, die physikalisch wirkende Prozessschritte ermöglichen oder vornehmen, die die Stoffzusammensetzung nicht verändern, insbesondere bestehend aus elektrischen Heiz- oder Kühlelementen für individuell einstellbare Temperaturen in den reaktiven Vorrichtungen, fluidischen Heiz- oder Kühlelementen, Heizelementen auf der Basis einer Umsetzung von Schwingungsenergie elektromagnetischer Wellen in die Aufwärmung von Reaktionsgemischen, sowie passiven Heizelementen aus elektrisch leitfähigen Materialien die vom Reaktionsmedium berührt oder durchflossen werden und induktiv erwärmt werden, wie beispielsweise induktive Erwärmung durch von außen aufgebrachte Magnetfelder, plattenartige Magnetfeldspulen zur Erzeugung von solchen Magnetfeldern im Reaktionsmedium, Plattenkondensatoren zur Aufprägung von statischen oder dynamischen elektrischen Potentialen auf das Reaktionsmedium, Platten zur Strömungszusammenführung oder -verteilung, Platten zur thermischen Energieumverteilung, um Recycleprozesse innerhalb einer Prozessfolge nachzustellen sowie statische Mischelemente zur Zwischenhomogenisierung zwischen aufeinanderfolgenden Prozessschritten.

Im Gegensatz zu den bisher aufgeführten Prozessen bei denen elektrische Energie umgesetzt wird, können thermoelektrische Materialien, die Temperaturunterschieden ausgesetzt werden, elektrische Energie erzeugen. Dazu können die Zellen bestückt werden mit Platten aus thermoelektrischen Materialien zusammen mit Platten, die beheizt oder gekühlt werden können.

Ebenso lassen sich die Eigenschaften von thermischen Energiespeichern optimieren. Dazu können Platten mit definierter Masse und Masse/Flächenverhältnis eingesetzt werden, auf denen flächige Temperatursensoren angebracht sind. Beispielsweise kann der von diesen angezeigte Temperaturverlauf, gemessen als Funktion der Zeit, ein Maß sein für deren Speichervermögen, wenn Fluide mit definiertem Massenstrom zugeführt werden. Darüber hinaus können thermische Dehnungen einzelner Zellen gemessen werden über Dehnungsmessstreifen oder laseroptisch, sodass Materialien, die sich unter thermischer oder elektrischer Last ausdehnen, charakterisiert werden können.

Weiterhin kann unterschieden werden in primäre und sekundäre Reaktorenergiequellen. Mit primären Energiequellen sind die für die Umsetzung der Edukte hauptsächlich verantwortlichen Energiequellen wie das angelegte Potential für elektrochemische Prozesse gemeint. Mit sekundären Energiequellen sind beispielsweise die Reaktorbeheizung für beispielsweise Brennstoffzellen oder reaktionsanregende Methoden wie Ultraschall- oder Mikrowellenerregung in Verbindung mit elektrochemischen Prozessen gemeint.

Auf diese Weise können eine Vielzahl von nichtreaktiven Vorrichtungen bzw. Elementen bereitgestellt werden.

Gemäß einer Ausführungsform der Erfindung ist eine nichtreaktive Vorrichtung ausgewählt aus einer Gruppe physikalisch wirkender Messverfahren von elektrischen Größen wie Potential, Spannung, Widerstand, Durchgangsstrom sowie komplexere Kontaktsensorik auf chemischer oder physikalischer Basis und biologische Aufwachsflächen für Bakterien, insbesondere in Dünnschicht- und Mikrotechnik hergestellte Lab-on-a-chip, bzw. Printed Electronics Vorrichtungen.

Auf diese Weise können nichtreaktive Vorrichtungen bereitgestellt werden, um beispielsweise eine durchgehend homogene Leitfähigkeit innerhalb der aktiven Kathodenbeschichtung zu erhalten, die wesentlich ist bei der Herstellung von Batteriematerialien. Gedruckte Leitfähigkeitssensoren, die auf einer Fläche in einer großen Anzahl hergestellt werden können, erlauben die Messung von lokalen Leitfähigkeiten auf beschichteten Kathoden im Betriebszustand oder unmittelbar danach. Mikrotechnisch strukturierte Oberflächen können als Aufwuchsflächen für Biofilme genutzt werden. Diese sind im Zusammenwirken mit Elektroden als Elektronenquellen nutzbar für die elektrisch unterstützte Umsetzung von Kohlenstoffquellen wie CO2 mithilfe von Bakterien, die sich auf diese Umsetzung spezialisiert haben. Diese könne beispielsweise genutzt werden für eine Screeningaufgabe für die Optimierung eines Genoms von Bakterien für eine erhöhte Umsetzung von CO2 zu Wertprodukten.

Eine weitere Anwendung betrifft das Gebiet der thermischen Energiespeicher. Dazu können Platten mit definierter Masse und Masse/Flächenverhältnis sowie flächigen Temperatursensoren angebracht auf einer oder auf beiden Breitseiten der Speicherplatte aufgebracht werden. Beispielsweise kann deren Temperaturverlauf gemessen als Funktion der Zeit ein Maß für deren Speichervermögen sein, wenn Fluide mit definiertem Massenstrom zugeführt werden. Thermische Dehnungen einzelner Zellen können gemessen werden über Dehnungsmessstreifen oder laseroptisch, sodass Materialien, die sich unter thermischer oder elektrischer Last ausdehnen, charakterisiert werden können. Im Gegensatz zu den bisher aufgeführten Prozessen bei denen elektrische Energie umgesetzt wird, können thermoelektrische Materialien, die Temperaturunterschieden ausgesetzt werden, elektrische Energie erzeugen. Dazu können die Zellen bestückt werden mit Platten aus thermoelektrischen Materialien zusammen mit Platten, die beheizt oder gekühlt werden können.

Gemäß einer Ausführungsform der Erfindung umfasst die Vorrichtung ein Versorgungsmodul zur Bereitstellung der Ressourcen für die Einstellung von Prozessparametern, ein Analysenmodul zur Analyse von wenigstens einem Produkt, und eine Steuerungsvorrichtung zur Steuerung der Prozessparameter.

Auf diese Weise kann eine vollfunktionsfähige Vorrichtung zur Untersuchung von chemischen Prozessen bereitgestellt werden.

Gemäß einer Ausführungsform der Erfindung ist die Steuerungsvorrichtung derart ausgestaltet ist, dass sie wenigstens einen der Prozessparameter für wenigstens einen der Einzelreaktoren gesondert steuern kann.

Auf diese Weise kann eine selektive Ansteuerung der Einzelreaktoren erfolgen, was eine Optimierung des Betriebs des Stapelplattenreaktors ermöglicht. Die Ansteuerung kann dabei in Abhängigkeit von Mess- und Analyseergebnissen von Prozessen erfolgen, die in anderen Einzelreaktoren ablaufen, insbesondere in Einzelreaktoren, deren Produkte die Edukte des selektiv angesteuerten Einzelreaktors bereitstellen.

Gemäß einer Ausführungsform der Erfindung umfasst die Aufnahmevorrichtung eine Schiene, die derart ausgestaltet ist, dass sie die Formkörperbausteine in einer vorbestimmten Ausrichtung und Position aufnehmen kann.

Auf diese Weise wird eine Positionierhilfe bereitgestellt, die eine ordnungsgemäße Ausrichtung der Formkörperbausteine sicherstellen kann, insbesondere auch deren Abdichtung gegeneinander und etwaige Anschlüsse zueinander positioniert.

Gemäß einer Ausführungsform der Erfindung stellt die Schiene der Aufnahmevorrichtung eine Positionierungshilfe der Pressvorrichtung dar.

Auf diese Weise wird nicht nur eine Positionierung der Formkörperbausteine zueinander bezüglich der Ausrichtung der Dichtungsgeometrie und der Anschlüsse sichergestellt, sondern auch für eine Verpressung der Formkörperbausteine gesorgt.

Gemäß einer Ausführungsform der Erfindung ist die Aufnahmevorrichtung dazu ausgeführt eine Wärmedehnung des Stapelplattenreaktors zu kompensieren, beispielsweise durch Aufbringen der Presskraft mit pneumatischer oder hydraulischer Hilfsenergie. Eine solche Verpressung über einen hydraulisch angepressten Kolben, der aus einem Druckreservoir gespeist wird, kompensiert eine Wärmedehnung, dadurch, dass die Druckregelung den Druck nachregelt, sollte eine zusätzliche Dehnkraft auf den Kolben wirken und dadurch zu einer Druckerhöhung im Druckreservoir führen.

Auf diese Weise können die Kräfte zwischen den Formkörperbausteinen im Wesentlichen konstant gehalten werden. Dies kann insbesondere für die Abdichtung zwischen den Formkörperbausteinen relevant sein. Die Kompensation der Wärmeausdehnung kann auch durch passive konstruktive Maßnahmen erreicht werden, etwa durch Federelemente, Press- oder Rahmenelemente mit einem Wärmeausdehnungskoeffizienten, deren Geometrie und Wärmeausdehnungskoeffizient so bemessen ist, dass er die Kräfte zwischen den Formkörperbausteinen im Wesentlichen konstant hält. Die Federelemente könne dabei den oben beschriebenen Kolben/Reservoir Mechanismus ersetzen.

Gemäß einer Ausführungsform der Erfindung weist der Stapelplattenreaktor eine Beheizungsvorrichtung auf, wobei die Beheizungsvorrichtung derart ausgelegt ist, dass sie den Stapelplattenreaktor erwärmen kann und dadurch eine Wärmeausdehnung des Stapelplattenreaktors hervorruft, die den Stapelplattenreaktor derart in die Aufnahmevorrichtung verpresst, dass eine Dichtungsgeometrie die jeweiligen Formkörperbausteine gegeneinander abdichtet. Die Beheizungsvorrichtung kann eine Kontaktheizung, beispielsweise in Form von Platten oder Manschetten sein, die mit Kanälen und Temperierungsflüssigkeit ausgestattet sind. Alternativ oder zusätzlich kann die Beheizungsvorrichtung elektrothermische Beheizungselemente aufweisen, die beispielsweise mit entsprechenden Temperatursensoren und Regelelementen ausgestattet sind, um eine autonome und automatische Kompensierung der Wärmeausdehnung vorzunehmen.

Auf diese Weise kann eine Abdichtung durch die Beheizung gesteuert werden. Die Beheizung kann in den einzelnen Formkörperbausteinen vorgesehen sein, etwa in der Näher der Dichtflächen, oder sich über den gesamten Stapelplattenreaktor erstrecken. Der Stapelplattenreaktor kann mit thermischen Dichtungselementen in Kombination mit dazugehörigen Beheizungsvorrichtung ausgestattet sein. Die Heizelemente können dabei wieder den oben beschriebenen Kolben/Hydraulik-Mechanismus ersetzen. Die Aufnahmevorrichtung kann so ausgestaltet sein, dass die Abdichtung dann erst durch Ausdehnung des Reaktors gegen einen nicht verschiebbaren mechanischen Widerstand erfolgt.

Gemäß einer Ausführungsform der Erfindung weist die Vorrichtung wenigstens einen Abscheider auf, der mit wenigstens einem der Einzelreaktoren und/oder reaktiven Elementen eines Einzelreaktors in Wirkverbindung steht, wobei insbesondere der wenigstens eine Abscheider in einer Ofenkammer angeordnet ist, die abgetrennt ist von der Ofenkammer, in der der Stapelplattenreaktor angeordnet ist.

Auf diese Weise können durch die Abscheider während der Reaktion angefallene Kondensatmengen oder eine gezielt abgetrennte flüssige Phase aus dem Stapelplattenreaktor aufgenommen werden. Darüber hinaus können die Abscheider als weitere Trennstufe dienen nach der ersten Abtrennung im Stapelplattenreaktor, indem beispielsweise eine weitere Abscheidung aus der Gasphase durch entsprechende Kühlung der Gasphase an der Innenwand des Abscheiders erfolgt.

Gemäß einer Ausführungsform der Erfindung umfasst die Vorrichtung eine Leseeinheit zum Lesen von auf den Formkörperbausteinen vorgesehenen Identifizierern und einen Roboter, wobei die Leseeinheit derart ausgeführt ist, dass sie auf den Formkörperbausteinen vorgesehene Identifizierer lesen kann, wobei der Roboter derart ausgeführt ist, dass er auf der Grundlage eines vorgebbaren strukturellen Bauplans oder funktionellen Bauplans für eine vorgesehene Funktionalität des Stapelplattenreaktors durch die Leseeinheit identifizierte Formkörperbausteine zusammensetzt.

Auf diese Weise ist ein automatisierter Zusammenbau des Stapelplattenreaktors möglich. Der vorgebbare strukturelle Bauplan kann vom Benutzer gemäß den Anforderungen an den Stapelplattenreaktor erstellt werden. Zu diesem Zweck kann eine Anzeige- und Visualisierungsvorrichtung verwendet werden, auf der der Benutzer die Zusammensetzung des Stapelplattenreaktors bei der Erstellung des Bauplans visualisiert bekommt.

Gemäß einer Ausführungsform der Erfindung ist die Aufnahmevorrichtung (40) derart ausgestaltet, dass sie automatisiert geöffnet und/oder geschlossen werden kann.

Auf diese Weise kann bei einem robotergestützen Zusammenbau die Aufnahmevorrichtung automatisiert geöffnet werden, die Formkörperbausteine automatisch gemäß dem vorgesehenen Bauplan eingesetzt werden und die Aufnahmevorrichtung automatisiert geschlossen werden und beispielsweise auch automatisiert die Anpressvorrichtung betätigt werden.

Auf diese Weise ermöglicht die automatisierte Einstellung der Dichtkraft einen schnelleren Ein- und Ausbau und verbesserte Handhabbarkeit der Vorrichtung gegenüber der manuellen Bedienung. Ein definiertes Einstellen der Dichtkraft erlaubt auch die Verwendung druckempfindlicher Medien falls eine Klammerung in einem krafttragenden äußeren Rahmen nicht möglich sein sollte.

Gemäß einer Ausführungsform der Erfindung kann an wenigstens einem Teil der Formkörperbausteine Identifizierungstags vorgesehen sein, die den jeweiligen Formkörperbaustein und/oder seine Funktionalitäten bzw. Eigenschaften kennzeichnet.

Auf diese Weise kann eine Überprüfung erfolgen, ob der richtige Formkörperbaustein an der beabsichtigten Stelle des Stapelreaktors angeordnet ist. Ferner kann ein Roboterunterstützter Zusammenbau unterstützt werden, wenn der Identifizierungstag maschinenlesbar ist. Der Identifizierungstag kann ein Barcode, QR-Code, anderer optische Code oder ein RFID Chip sein. Gemäß einer Ausführungsform der Erfindung kann eine Visualisierungsvorrichtung vorgesehen sein, die auf der Grundlage der identifizierten Formkörperbausteine die Leitungsverläufe der Zuleitungen und Ableitungen in und aus der oder den Reaktorkammern visualisiert werden.

Auf diese Weise kann eine Funktionskontrolle erfolgen, die dem Benutzer visualisiert, ob der Stapelplattenreaktor, dessen Inneres der Benutzer am Reaktor nicht ohne Weiteres sehen kann, wie beabsichtigt zusammengebaut ist und ob die Leitungen wie beabsichtigt verlaufen.

Gemäß einer Ausführungsform der Erfindung umfasst der Stapelplattenreaktor: eine Mehrzahl von nebeneinanderliegenden plattenförmigen Formköperbausteinen; wenigstens eine Zuleitung für ein Edukt; wenigstens eine Ableitung für ein Produkt; wobei die Mehrzahl von Formköperbausteinen des Stapelplattenreaktors gestapelt aneinander liegen; wobei die Mehrzahl der gestapelt aneinander liegenden Formköperbausteine in Richtung der Stapelrichtung verpressbar sind.

Auf diese Weise kann ein Stapelplattenreaktor mit einer Vielzahl von Einzelreaktoren bereitgestellt werden, der es ermöglicht verschiedene Variationen von Prüf- und Testvorgängen unter gleichen Prozessbedingungen vornehmen zu können. Unterschiedliche Einzelreaktoren können etwa mit unterschiedlichen reaktiven oder nichtreaktiven Vorrichtungen bzw. Elementen bestückt werden, und beispielsweise bei gleichen Drücken und Temperaturen einem Versuchs- oder Testablauf unterzogen werden.

Gemäß der Erfindung weist jeder der Formkörperbausteine wenigstens eine Kavität an einer Plattenfläche des Formkörpers mit einer umlaufenden Dichtungsfläche um die Kavität herum auf und wenigstens einen von einem Zulauf für ein Edukt und einem Ablauf für ein Produkt, der in der Kavität mündet, derart, dass die Kavitäten zweier benachbarter Formkörper im zueinander gewandten und zusammengebauten Zustand eine Reaktorkammer bilden, wobei zwischen zwei benachbarten Formkörpern eine reaktive Vorrichtung angeordnet ist.

Auf diese Weise kann ein hochmodularer Stapelplattenreaktor bereitgestellt werden, dessen Formkörperbausteine modular zusammengesetzt werden können, je nach Anforderung an den Stapelplattenreaktor.

Gemäß einer Ausführungsform der Erfindung ist die reaktive Vorrichtung wenigstens eines Formkörperpaares ein Katalysator und wenigstens eine der beiden Formkörper des Formkörperpaares weist eine elektrische Zuleitung zu dem Katalysator auf, um den Katalysator individuell oder gleich elektrisch anzusteuern.

Auf diese Weise ist eine Steuerung der Prozessparameter nicht nur der Zu- und Ableitung und der Kammerbedingungen möglich, sondern auch die gezielte Steuerung des Katalysators. Das ermöglicht insbesondere eine schnell reagierende Ansteuerung, insbesondere wenn der Katalysator auch gleichzeitig als ein Sensor verwendet wird und dessen Sensordaten als Grundlage für die Ansteuerung des Katalysators herangezogen wird.

Gemäß einer Ausführungsform der Erfindung weist jeder der Formkörperbausteine wenigstens eine Leitungsanordnung auf mit wenigstens einer Mündung, die auf der Plattenfläche mit der Kavität mündet, sodass Leitungsanordnungen zweier kavitätsseitig aneinander liegenden Formkörper über jeweilige Mündungen miteinander verbunden sind, und wenigstens einer von einer Mündung, die auf der der Plattenfläche mit der Kavität gegenüberliegenden Plattenfläche mündet, und einer Mündung, die in die Kavität mündet.

Auf diese Weise kann eine komplizierte Verkopplung der einzelnen Einzelreaktoren und Formbausteine wesentlich vereinfacht werden. Die Leitungen werden dann über die Stirnflächen der Formkörperbausteine verbunden, ohne diese erst nach außen führen zu müssen. Dadurch können auch die Temperaturen konstanter gehalten werden. Ferner wird auf diese Weise ein automatisierter Zusammenbau wesentlich erleichtert, insbesondere, da die Verbindung der Leitungen bereits durch das benachbarte Positionieren erfolgt und keine zusätzlich Verkopplung mehr stattfinden muss.

Gemäß einer Ausführungsform der Erfindung weist wenigstens ein Teil der Formkörperbausteine einen insbesondere maschinenlesbaren Identifizierer auf, der den Formkörperbaustein hinsichtlich einer Geometrie seiner Leitungsanordnung identifiziert.

Auf diese Weise kann ein automatisierter Zusammenbau erfolgen und dieser überwacht werden, insbesondere bei einem robotergestützten Zusammenbau.

Gemäß einer Ausführungsform der Erfindung weist wenigstens ein Teil der Formkörperbausteine eine erste Leitungsanordnung auf, die einer Parallelschaltung nebeneinanderliegender Reaktorkammern dient, und eine zweite Leitungsanordnung, die einer Reihenschaltung nebeneinanderliegender Reaktorkammern dient, wobei die erste und zweite Leitungsanordnung derart in dem jeweiligen Formkörperbaustein angeordnet sind, dass in einer ersten Orientierung des Formkörperbausteins die erste Leitungsanordnung mit einer entsprechenden Leitungsanordnung eines benachbarten Formkörperbaustein verbunden und aktiv ist und in einer zweiten Orientierung des Formkörperbausteins die zweite Leitungsanordnung mit einer entsprechenden Leitungsanordnung eines benachbarten Formkörperbausteins verbunden und aktiv ist.

Auf diese Weise kann ein Multifunktions-Formkörperbaustein bereitgestellt werden, der je nach Orientierung seines Einbaus unterschiedliche Leitungsführungen realisieren kann. Dadurch kann für unterschiedliche Verschaltungsanordnungen, parallel oder in Reihe, ein und derselbe Formköperbaustein verwendet werden, der dann nur in einer anderen Orientierung eingesetzt wird. Die Variation der Leitungsverschaltung kann durch ein Vertauschen der Dichtungsflächen erfolgen, oder durch eine Rotation um die Längsachse des Stapelplattenreaktors unter Beibehaltung der Richtung der Dichtfläche oder auch unter Vertauschen der Dichtfläche.

Gemäß einer Ausführungsform der Erfindung wird ein Verfahren zur Untersuchung von chemischen Prozessen unter Verwendung einer zuvor beschriebenen Vorrichtung bereitgestellt, wobei das Verfahren aufweist: Auswählen eines Betriebsmodus des Stapelplattenreaktors aus einem Parallelbetrieb, einem Reihenbetrieb oder einem gemischten Parallel- und Reihenbetrieb der Einzelreaktoren des Stapelplattenreaktors; Konfigurieren des Stapelplattenreaktors durch Stapeln der Formkörperbausteine gemäß des ausgewählten Betriebsmodus; Pressen der gestapelt aneinander liegenden Formköperbausteine des Stapelplattenreaktors in Richtung der Stapelrichtung; Einleiten wenigstens eines Eduktes in den Stapelplattenreaktor; Steuern der Prozessparameter der Einzelreaktoren gemäß dem gewählten Betriebsmodus; wobei das durch wenigstens einen Einzelreaktor durchgeführten Verfahren ausgewählt ist aus einer Gruppe, bestehend aus einem Gasauftrennungsverfahren, einer elektrolytischen Aufspaltung, einer Hydrierung von beispielsweise ungesättigten Kohlenwasserstoffen, einem Gasabtrennungsverfahren, einer Umsetzung von elektrischer Energie in chemische Wertprodukte, insbesondere Power-to-Gas oder Power-to-Liquid, einer Umsetzung von chemischer Bindungsenergie in elektrisch verwendbare Energie, einer Unterstützung katalytischer Oberflächenprozesse durch Aufbringen eines elektrischen Feldes zur Reduzierung der Aktivierungsenergie bei chemischer Umsetzung an Partikeln oder funktionalisierten Membranen in Mehrphasengemischen.

Auf diese Weise kann ein Verfahren bereitgestellt werden, welches chemische Untersuchungen zeitgleich oder in einem engen zeitlichen Zusammenhang an einer großen Anzahl von funktionellen Elementen unter Variation der Prozessparameter erlaubt. Es wird dem Anwender ermöglicht, in kurzen Zeiträumen Multiparameterräume mit hoher Genauigkeit und Präzision zu charakterisieren und anhand der hierbei erzielten Charakterisierungsdaten Rückschlüsse zu ziehen, wie funktionelle Elemente oder chemische Prozesse verbessert werden können.

Gemäß einer Ausführungsform der Erfindung wird für die einzelnen Verfahrensstufen der Prozessparameter eine Temperatur im Bereich von 273,15 bis 1273,15 K gewählt, insbesondere im Bereich von 298,15 bis 1073,15 K, weiter insbesondere bei einer Temperatur im Bereich von 373,15 - 873,15 K.

Gemäß einer Ausführungsform der Erfindung wird für die einzelnen Verfahrensstufen der Prozessparameter Druck im Bereich von 0,05 bis 500 bara gewählt, insbesondere im Bereich von 0,1 bis 300 bara, weiter insbesondere im Bereich von 1 bis 250 bara.

Gemäß einer Ausführungsform der Erfindung wird das Verfahren in unterschiedlichen Konfigurationen durchgeführt, wobei die Konfigurationen ausgewählt sind aus einer Gruppe bestehend aus Screening-Konfiguration, integralen Prozessführung zur Realisierung von Folgeprozessen, und Konfiguration mit Hochskalierung des Maßstabs einzelner Prozessschritte oder Folgen von Prozessschritten.

Gemäß einer Ausführungsform der Erfindung werden zur Untersuchung von Membranen die reaktiven Elemente ausgewählt werden aus einer Gruppe bestehend aus multifunktionalen Platten in Form von Membranen, die katalytische Aktivität aufweisen, Membranen mit katalytisch aktiven Komponenten, und katalytisch beschichtete Membranen, sowie gestapelten Membranen bei denen jede Membranfläche eine bestimmte Eigenschaft besitzt.

Gemäß einer Ausführungsform der Erfindung werden die Formate der Materialträger so gewählt, dass sie auf ihrer Oberfläche mit Messgeräten vermessen werden können. Diese sog. Offline-Messungen können vor und nach ("Post-mortem") dem Einsatz der Materialträger im EPR erfolgen. Mit Kenntnis der Reaktionsbedingungen können dann Struktur-Eigenschaftsbeziehungen aus der Oberflächenanalyse gewonnen werden. Die Eigenschaften der Materialien beeinflussen die Produktqualität, die wiederum gemessen werden kann durch online-Analyse (beispielsweise GC, MIR, Strom-Potentialkurven) im Produktstrom. Das Erscheinungsbild der Materialien auf den Materialträgern kann direkte Auswirkung auf deren Eigenschaften (Beispiele: grobkörniges oder feinkörniges Gefüge, hohe Porosität/niedrige Porosität, heterogenes/homogenes Gefüge) haben. Zu den Korrelationen zwischen Online Testbetrieb und Offline Analytik, wie oben beschrieben, gibt es noch Korrelationen innerhalb der Offline Analytik, die weitere Hinweise liefert (beispielsweise EDX und XRD Messung an derselben Stelle gemessen auf dem Materialträger). Es besteht die Möglichkeit Systeme aus dem Gebiet Computer Vision bereitzustellen, die in der Lage sind Strukturen auf Oberflächen zu erkennen und deren Lage (z.B. durch ein flächiges Koordinatensystem) anzuzeigen. Mit Hilfe dieser Koordinaten können verfahrbare Messgeräte angewiesen werden gezielt an diesen Stellen zu messen. Computer Vision Systeme sind außerdem in der Lage Unterschiede in Strukturen auf einer Oberfläche zu erkennen und sie zu klassifizieren.

Durch diese Klassenbildung in Verbindung mit lokal aufgelösten Messungen an unterschiedlichen Stellen auf dem Materialträger aber immer innerhalb derselben Klasse können Ergebnisse unterschiedlicher Messverfahren nicht nur lokal miteinander korreliert werden, sondern auch klassenweise und damit Klasseneigenschaften ermittelt werden. Mithilfe dieser Klasseneigenschaften kann besonders in heterogenen Materialien, deren Synthese sehr gezielt beeinflusst werden, da Klassen häufig mit unterschiedlichen Komponenten oder Komponentengemischen identisch sind. Ein einfaches Beispiel ist die Einstellung der leitfähigen Anteile zu den katalytisch aktiven Anteilen (aber nicht gut leitfähigen) in einem elektrokatalytisch aktiven Material, um eine hohe Produktausbeute zu erhalten, die wiederum abhängt von dem tatsächlich verwendbaren Potential, das an dem aktivem Material ankommt. Es ist naheliegend zu erwarten, dass eine gute elektrische Kontaktierung der aktiven Anteile auch zu einer hohen Ausbeute an gewünschtem Produkt führt. Auf der anderen Seite darf der Anteil an aktivem Material auch nicht zu klein werden. Über ein Computer Vision System kann das Optimum aus beiden Anteilen gefunden werden, indem die unterschiedlichen Anteile aufgrund ihrer unterschiedlichen Morphologie optisch unterschieden werden und mit der Produktausbeute verglichen werden. Die Synthese kann dann entsprechend angewiesen werden neue Materialien vorzubereiten mit dieser Zusammensetzung.

Weiterhin können die Einsetzkassetten mit optisch transparenten Platten abgedeckt sein so dass mit einer ebenfalls in die Stapelung eingebrachten plattenartigen spektroskopischen oder optischen Sensorik das direkte Geschehen an der Oberfläche beobachten werden kann.

Es wird die Verwendung einer KI vorgeschlagen. Elektrokatalyse ist ein Multiparameterfeld und viel umfangreicher als das Parameterfeld in der heterogenen Katalyse. Zum üblichen stationären Betrieb kommt hier noch der teildynamische Betrieb (Zyklovoltametrie) oder dynamische Betrieb (Impedanzspektrometrie) mit erhöhter Anforderung an die Datenrate. Einsatzstoffe (Stichwort "Neue Rohstoffbasis") sind viel variabler als unsere aktuelle Rohölbasis. Grundlage für eine Softwareumgebung könnte "Tensorflow" ein OpenSource Programm von Google sein.

Zusammen mit Daten zur Katalysatorsynthese können anhand der mitgeschriebenen Prozessdaten sowie der zeitgleich gemessenen Online Messdaten und den Post-mortem Messdaten neue Anweisungen für sinnvolle Parametersätze durch die Kl vorgeschlagen werden.

Diese und andere Merkmale werden anhand der folgenden Figurenbeschreibung erläutert.

**Kurze Beschreibung der Figuren**
- Figur 1: zeigt eine Vorrichtung mit einem darin angeordneten Stapelplattenreaktor gemäß einer beispielhaften Ausführungsform der Erfindung;
- Figur 2: zeigt eine Vorrichtung mit einem darin angeordneten Stapelplattenreaktor mit einer Mehrzahl von Einzelreaktoren gemäß einer beispielhaften Ausführungsform der Erfindung;
- Figur 3: zeigt eine perspektivische Ansicht eines Stapelplattenreaktors gemäß einer beispielhaften Ausführungsform der Erfindung;
- Figur 4: zeigt eine Aufnahmevorrichtung mit einem darin angeordneten Stapelplattenreaktor gemäß einer beispielhaften Ausführungsform der Erfindung;
- Figur 5: zeigt einen Einzelreaktor in einer Explosionsansicht gemäß einer beispielhaften Ausführungsform der Erfindung;
- Figur 6: zeigt einen Einzelreaktor in zusammengebautem Zustand gemäß einer beispielhaften Ausführungsform der Erfindung;
- Figur 7a: zeigt einen Formkörperbaustein mit einer Dichtungsanordnung gemäß einer beispielhaften Ausführungsform der Erfindung;
- Figur 7b: zeigt einen Formkörperbaustein mit einer alternativen Dichtungsanordnung gemäß einer beispielhaften Ausführungsform der Erfindung;
- Figur 7c: zeigt einen Formkörperbaustein mit einer alternativen Dichtungsanordnung gemäß einer beispielhaften Ausführungsform der Erfindung;
- Figur 8: zeigt eine schematische Schnittansicht eines Stapelplattenreaktors mit mehreren Einzelreaktoren gemäß einer beispielhaften Ausführungsform der Erfindung;
- Figur 9a: zeigt einen aus zwei Formkörperbausteinen zusammengesetzten Einzelreaktor mit einer beispielhaften Leitungsführung gemäß einer beispielhaften Ausführungsform der Erfindung;
- Figur 9b: zeigt einen aus zwei Formkörperbausteinen zusammengesetzten Einzelreaktor mit einer weiteren beispielhaften Leitungsführung gemäß einer beispielhaften Ausführungsform der Erfindung;
- Figur 9c: zeigt einen aus zwei Formkörperbausteinen zusammengesetzten Einzelreaktor mit einer weiteren beispielhaften Leitungsführung gemäß einer beispielhaften Ausführungsform der Erfindung;
- Figur 10: zeigt eine schematische Schnittansicht eines Einzelreaktors mit einer Leitungsführung gemäß einer beispielhaften Ausführungsform der Erfindung;
- Figur 11: zeigt eine schematische Ansicht einer Anordnung mit mehreren Stapelplattenreaktoren gemäß einer beispielhaften Ausführungsform der Erfindung;
- Figur 12: zeigt eine schematische Stapelplattenreaktoranordnung gemäß einer beispielhaften Ausführungsform der Erfindung;
- Figur 13: zeigt eine weitere schematische Stapelplattenreaktoranordnung gemäß einer beispielhaften Ausführungsform der Erfindung;
- Figur 14: zeigt eine weitere schematische Stapelplattenreaktoranordnung gemäß einer beispielhaften Ausführungsform der Erfindung;
- Figur 15a: zeigt einen schematischen Prozessablauf mit einem Stapelreaktor je Prozessschritt gemäß einer beispielhaften Ausführungsform der Erfindung;
- Figur 15b: zeigt einen schematischen Prozessablauf mit einem kombinierten Stapelreaktor für alle Prozessschritt analog zu Figur 15a gemäß einer beispielhaften Ausführungsform der Erfindung;
- Figur 16: zeigt eine Roboteranordnung zum automatisierten Zusammenbau eines Stapelplattenreaktors gemäß einer beispielhaften Ausführungsform der Erfindung;
- Figur 17: zeigt einen schematischen Ablauf des Verfahrens zur Untersuchung von chemischen Prozessen gemäß einer beispielhaften Ausführungsform der Erfindung;
- Figur 18: zeigt eine Verschaltung mehrerer Einzelreaktoren bei einem elektrischen Prozess gemäß einer beispielhaften Ausführungsform der Erfindung;
- Figur 19a: zeigt einen Prozessablauf für eine erste (linke) Seite der Einzelreaktoren gemäß einer beispielhaften Ausführungsform der Erfindung;
- Figur 19b: zeigt einen Prozessablauf für eine zweite (rechte) Seite der Einzelreaktoren aus Figur 19a gemäß einer beispielhaften Ausführungsform der Erfindung;
- Figur 20: zeigt ein verfahrenstechnisches Fließbild zur Durchführung eines elektrochemischen parallelen Betriebs von Reaktoren geeignet für das Screening von Katalysatoren gemäß einer beispielhaften Ausführungsform der Erfindung.

Weitere Merkmale und Vorteile der erfindungsgemäßen Verfahren und der Vorrichtung ergeben sich aus den Figuren und aus der zugehörigen Figurenbeschreibung. Es versteht sich, dass die vorstehend genannten und die nachstehend noch zu erläuternden Merkmale nicht nur in der jeweils angegebenen Kombination, sondern auch in anderen Kombinationen oder in Alleinstellung anwendbar sind ohne den Rahmen der vorliegenden Erfindung zu verlassen. Ausführungsbeispiele der Erfindung sind in den Figuren dargestellt und werden nachfolgend im Detail beschrieben.

### Detaillierte Beschreibung beispielhafter Ausführungsformen

Zunächst wird anhand der Gesamtheit der Figuren eine allgemeine Beschreibung der Erfindung vorgenommen und anschießend die Erfindungsdetails mit einer konkreten Bezugnahme auf die Figuren beschrieben.

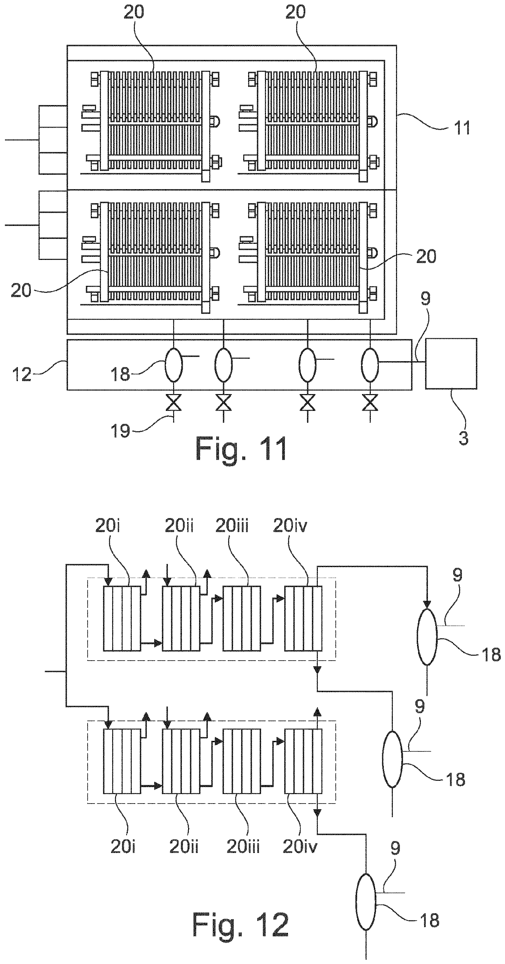

Die vorliegende Erfindung betrifft eine Vorrichtung und ein Verfahren zur Untersuchung von chemischen Prozessen, wobei die Vorrichtung modular aufgebaut ist und ein zentrales Prozessmodul umfasst, welches eine oder mehrere Ofenkammern 11, 12 (siehe z.B. Figur 11) aufweist. In zumindest einer Offenkammer 11 des Prozessmoduls ist zumindest ein Reaktor 20 angeordnet, der als Plattenreaktor vom Filterpressentyp, beziehungsweise als ein Stapelplattenreaktor, ausgestaltet ist. Darüber hinaus umfasst die Vorrichtung Befestigungselemente 40 zur Fixierung des zumindest einen Stapelplattenreaktors 20 in der Ofenkammer 11 sowie Anschlusselemente für die Versorgungsleitungen 30a, 30b, 30c, 30d einschließlich elektrischer Leitungen, und Auslaufleitungen beziehungsweise Ablaufleitungen. Die erfindungsgemäße Vorrichtung wird für Screening-Untersuchungen, für die Verfahrensentwicklung und/oder für Hochskalierungsuntersuchungen verwendet.

Das Screening von Katalysatoren bedeutet, dass eine große Anzahl von unterschiedlichen Katalysatoren in genau der gleichen Weise untersucht wird, um diese im Hinblick auf die Leistungseigenschaften zu charakterisieren. In der gleichen Weise kann sich das Screening auch auf funktionelle Elemente einer Vorrichtung beziehen, um auch hier diejenigen Elemente zu identifizieren, die die optimalen Leistungseigenschaften aufweisen. Im weiteren Sinn kann sich das Screening auch auf die Untersuchung und Optimierung von Prozessparametern selber beziehen, wobei in diesem Fall die funktionellen Elemente der Vorrichtung identisch sind.

Das erfindungsgemäße Reaktorsystem bietet auch den Vorteil, dass es in einer abgewandelten Form in einer Hochdurchsatzvorrichtung eingesetzt werden kann. Eine Hochdurchsatzvorrichtung ist dadurch gekennzeichnet, dass diese mit einer Mehrzahl beziehungsweise einer Vielzahl von Reaktionskanälen ausgestattet ist.

Bei dem zumindest einen Reaktor handelt es sich um einen Plattenreaktor vom Filterpressentyp, beziehungsweise um einen Stapelplattenreaktor 20, wobei der Typ des Reaktors ausgewählt ist aus der Gruppe Membranplattenreaktor, elektrochemischer Plattenreaktor in Form eines Brennstoffzellenreaktors, elektrochemischer Plattenreaktor in Form eines Elektrolysators, photokatalytischer Plattenreaktor, insbesondere photokatalytischer Plattenreaktor mit integrierter LED-Quelle.

Die einzelnen Stapelplattenreaktoren 20, 20i, 20ii, 20iii, 20iv werden gebildet durch einzelne Formkörperbausteine 21, 22, 23, 24, die, je nach der Ausführungsform, in unterschiedlicher Weise in einer einzelnen Ofenkammer 11 oder auch in mehreren Ofenkammern 11 angeordnet werden können. Das bedeutet, dass ein Stapelplattenreaktor 20, der aus einzelnen Formköperbausteinen 21, 22, 23, 24 gebildet ist, mehrere identischen Einzelreaktoren 30 aufweisen kann, in denen das gleiche Verfahren durchgeführt wird. Es werden beispielsweise in Abhängigkeit von der Verschaltung der einzelnen Einzelreaktoren 30 entweder beispielsweise vier Reaktionen beziehungsweise Verfahren parallel oder vier Reaktionen oder Verfahren seriell durchgeführt. Ein einzelner Stapelplattenreaktor weist eine Anzahl von Einzelreaktoren auf, die im Bereich von 1 bis 100 liegen, vorzugweise im Bereich von 2 bis 48, weiter insbesondere im Bereich von 4 bis 24. Die einzelnen Stapelplattenreaktoren 20, beziehungsweise die einzelnen Einzelreaktoren 30, die aus den Formkörperbausteinen 21, 22, 23, 24 gebildet werden, lassen sich in unterschiedlicher Weise in der Ofenkammer 11, 12 des zentralen Prozessmoduls anordnen.

Das erfindungsgemäße Verfahren wird insbesondere für die Untersuchung von chemischen Prozessen eingesetzt, die ausgewählt sind aus der Gruppe Synthese von Kohlenwasserstoffen (Aromaten, synthetische Kraftstoffe, Aliphaten), insbesondere ausgehend von Kohlendioxid und Wasser, Alkenen insbesondere ausgehend von Wasserstoff und Kohlendioxid, Alkinen insbesondere ausgehend von Wasserstoff und Kohlendioxid, Methanol insbesondere ausgehend von Wasserstoff und Kohlendioxid, Wasserstoff insbesondere durch elektrolytische Spaltung von Wasser. Insbesondere wird das eingesetzte Kohlendioxid durch ein selektives Membrantrennverfahren, beispielsweise aus der Auftrennung von Luft, erhalten oder durch eine chemische Reaktion. Es können auch Kombinationsverfahren durchgeführt werden, bei denen eine Vielzahl von Prozessschritten, insbesondere vier Prozessschritte, in einer einzigen Anordnung durchgeführt werden.

In einer bevorzugten Ausführungsform betreffen die erfindungsgemäße Vorrichtung und das erfindungsgemäße Verfahren den Bereich erneuerbare Energie und Einsatz regenerativer Rohstoffe.

Insbesondere bezieht sich das erfindungsgemäße Verfahren auf die Synthese von Methanol und umfasst eine oder mehrere der nachfolgend genannten Stufen:
(a) Gasauftrennungsverfahren, insbesondere Luftauftrennung, mittels Membranplattenreaktor,
(b) Elektrolytische Aufspaltung von Wasser in Wasserstoff und Sauerstoff mittels Plattenreaktor in Form eines Elektrolysators,
(c) Hydrierung von Kohlendioxid mittels elektrochemischem Membranplattenreaktor,
(d) Gasabtrennungsverfahren eines methanolhaltigen Gasgemisches mittels Membranplattenreaktor.

Ein weiterer Aspekt der Erfindung ist auch dadurch gegeben, dass die erfindungsgemäße Vorrichtung zur Durchführung eines Entwicklungsverfahren eingesetzt wird. Das Entwicklungsverfahren ist ein mehrstufiges Verfahren, das eine Reihe von unterschiedlichen Prozessstufen; beispielsweise (1) bis (6) Prozessstufen umfasst. Ein Aspekt der erfindungsgemäßen Vorrichtung und des erfindungsgemäßen Verfahrens hierbei ist es auch, dass der zumindest eine Stapelplattenreaktor 20 konfigurierbar ist und die Nachstellung von unterschiedlichen Screening-Stufen oder gesamten Arbeitsabläufen ermöglicht.

Bei der Durchführung des Verfahrens wird nun für eine oder mehrere Prozessstufen, jeweils der beste Parameterraum bestimmt. Dies erfolgt dadurch, dass der Stapelplattenreaktor 20 in einer Konfiguration in der Ofenkammer 11 eingesetzt wird, bei der in jedem Einzelreaktor 30 des Stapelplattenreaktors 20 ein anderer Prozessparameter getestet wird. Beispielsweise handelt es sich bei dem Prozessparameter zunächst um die Auswahl der leistungsstärksten Trennmembran für die Abtrennung von Kohlendioxid aus der Luft. Ein Vorteil ist die individuelle Konfigurierbarkeit der Platten. Vorteilhaft ist, dass mittels ein und derselben Vorrichtung die unterschiedlichen Prozessstufen in einer Screening-Konfiguration untersucht werden.

In einer bevorzugten Ausführungsform wird das erfindungsgemäße Verfahren zur Untersuchung von chemischen Prozessen dazu verwendet, um Membranen zu untersuchen, insbesondere werden bei der Durchführung des Verfahrens Bauelemente verwendet, die aus der Gruppe der multifunktionalen Platten stammen, wobei es sich bei multifunktionalen Platten um Membranen handelt, die katalytische Aktivität aufweisen, insbesondere Membranen mit katalytisch aktiven Komponenten, katalytisch beschichtete Membranen, mikromaschinell gefertigte Bauteile, mittels 3D-Druck hergestellte Bauteile, Elemente zur Flussverteilung mit Mikrokanälen.

In einer Konfiguration zur Prozessoptimierung wird der gesamte Prozess oder zumindest mehrere zusammenhängende Teilstufen des Prozesses in einem zeitlich zusammenhängenden Arbeitsablauf untersucht. Mehrere Prozessstufen werden zu einem integralen Prozessablauf zusammengefasst. Vorteilhaft bei der integralen Prozessführung ist, dass der Arbeitsablauf unter realen Bedingungen in Echtzeit untersucht wird. Dabei können besonders genaue Daten erzielt werden, da die analytischen Geräte, mit denen die einzelnen Prozessstufenprodukte charakterisiert werden, in einem sehr engen zeitlichen Fenster für die Untersuchungen verwendet werden. Daraus resultiert eine sehr hohe Genauigkeit in Bezug auf die analytischen Daten, die mittels der analytischen Messgeräte bestimmt werden.

In einer weiteren Betriebsweise kann das Skalierungsverhalten bei einer Vergrößerung des Prozessmaßstabs (Konfiguration mit Hochskalierung des Maßstabs) untersucht werden. Dies wird dadurch erreicht, dass beispielsweise in mehreren Reaktorplatten eines Stapelplattenreaktors eine identische Prozessstufe unter identischen Versuchs-bedingungen durchgeführt wird.

Ein weiterer Aspekt der Erfindung betrifft auch ein Computerprogramm auf einem Datenträger zur Steuerung der erfindungsgemäßen Vorrichtung und zur Durchführung des erfindungsgemäßen Verfahrens. Das Computerprogramm ermöglicht es dem Benutzer, das erfindungsgemäße Verfahren zumindest teilweise automatisiert beziehungsweise auch in einer vollautomatisierten Verfahrensweise durchzuführen.

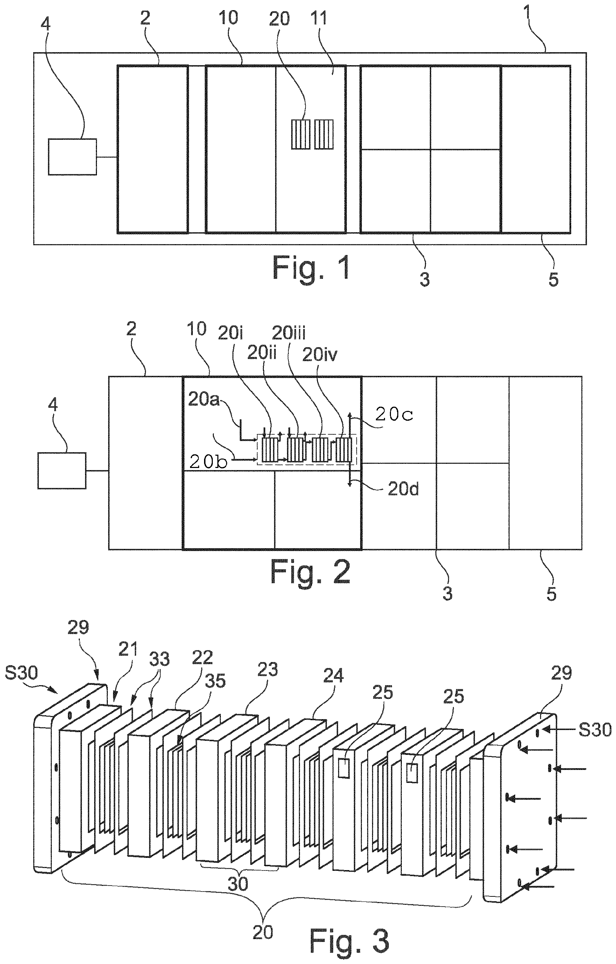

Figur 1 zeigt eine Vorrichtung 1 mit einem darin angeordneten Stapelplattenreaktor 20 gemäß einer beispielhaften Ausführungsform der Erfindung. Figur 1 zeigt dabei die schematische Darstellung der Vorrichtung 1 zur Untersuchung von chemischen Prozessen, die modular aufgebaut ist und die ein zentrales Prozessmodul aufweist mit einem Versorgungsmodul 2, einem Analysemodul 3, einer Steuerungsvorrichtung 4 und einem Schaltschrank 5. Ferner ist ein Ofen 10 mit einer Ofenkammer 11 vorgesehen. In der Ofenkammer 11 des Prozessmoduls sind in der in Figur 1 gezeigten Ausführungsform zwei separate Stapelplattenreaktoren 20 angeordnet.

Figur 2 zeigt eine weitere Ausführungsform der Vorrichtung mit einer darin angeordneten Stapelplattenreaktoranordnung 20. Die Vorrichtung 1 weist auch hier ein Versorgungsmodul 2, ein Analysemodul 3, eine Steuerungsvorrichtung 4 und einen Schaltschrank 5 auf. Bei der Vorrichtung der Figur 2 sind in einer Ofenkammer eines Ofens 10 vier unterschiedliche Stapelplattenreaktoren 20i, 20ii, 20iii, 20iv in einer seriellen Verknüpfung angeordnet sind. Jeder einzelne der Stapelplattenreaktoren 20i, 20ii, 20iii, 20iv umfasst jeweils vier Reaktorplatten. Der Stapelplattenreaktor 20 in Figur 2 weist eine primärseitige Zuleitung 20a, eine sekundärseitige Zuleitung 20b, eine primärseitige Ableitung 20c und eine sekundärseitige Ableitung 20d des Stapelplattenreaktors auf.

Es kann auch eine Vielzahl von Stapelplattenreaktoren 20 vorgesehen sein, die in der Ofenkammer 11 mit Befestigungselementen fixiert werden. Eine mögliche Positionierung der Stapelplattenreaktoren 20 ist in unterschiedlichen Ebenen entlang der Vertikalachse in einer oder mehreren Ofenkammern 11, 12, in einer Aufreihung entlang einer horizontalen Achse von einer oder mehreren Ofenkammern 11, 12, oder einer Stapelung entlang der Vertikalachse in einer oder mehreren Ofenkammern möglich. Ein Teil der Stapelplattenreaktoren kann entlang einer horizontalen Achse in einer oder mehreren Ofenkammern 11, 12 angeordnet sein. Die Stapelplattenreaktoren 20 können insbesondere entlang der horizontalen Achse in einer oder mehreren Ofenkammern 11, 12 zu einem einzelnen Modul angeordnet werden. Das Modul enthält 2 bis 10 Einzelreaktoren, insbesondere 4 Einzelreaktoren.

Jeder Stapelplattenreaktor 20 kann eine Anzahl von zwei oder mehreren Einzelreaktoren 30 aufweisen, insbesondere je eine Anzahl von 2 bis 40 Einzelreaktoren, insbesondere je eine Anzahl von 4 bis 20 Einzelreaktoren 30. Die Einzelreaktoren 30 können eine Dicke in einem Bereich von 0,5 bis 4 cm, insbesondere 0,8 bis 3 cm, insbesondere 1,5 bis 2,5 cm haben. Die Höhe und Tiefe der Einzelreaktoren liegt in einem Bereich von beispielsweise 10 bis 40 cm, insbesondere in einem Bereich von 15 bis 35 cm, insbesondere in einem Bereich von 20 bis 30 cm. Die Breite der einzelnen Stapelplattenreaktoren liegt in einem Bereich von 0,01 bis 0,9 m, insbesondere in einem Bereich von 0,1 bis 0,7 m.

Jeder einzelne Stapelplattenreaktor 20 kann jeweils mit einer separaten Temperierungsvorrichtung oder alle zusammen mit einer gemeinsamen Temperierungsvorrichtung verbunden sein.

Die Vorrichtung kann neben einem oder mehreren Stapelplattenreaktoren 20 auch einen oder mehrere Rohrreaktoren 8 aufweisen; wobei Stapelplattenreaktoren 20 und die Rohrreaktoren 8 in einer seriellen Anordnung oder in einer parallelen Anordnung vorgesehen sein können, insbesondere weist das zentrale Prozessmodul der Vorrichtung eine Kapazität auf, um entweder einen Stapelplattenreaktor 20 oder bis zu 40 Rohrreaktoren 8 aufzunehmen.

Figur 3 zeigt eine perspektivische Ansicht eines Stapelplattenreaktors 20. Der Stapelplattenreaktor 20 weist eine Vielzahl von Formkörperbausteinen 21, 22, 23, 24 auf, die gestapelt in Längsrichtung des Stapelplattenreaktors neben einander liegen. Jeweils zwei benachbarte Formkörperbausteine 21, 22; 22, 23; 23, 24 bilden einen Einzelreaktor 30. Speziell ausgestaltete Endplatten 29 bilden den beidseitigen Abschluss des Stapelplattenreaktors 20. Zwischen benachbarten Formkörperbausteinen 21, 22 liegen reaktive bzw. nichtreaktive Vorrichtungen bzw. Elemente 35 und Dichtungen 33 zur Abdichtung der Reaktionsräume der Einzelreaktoren 30. Es sei angemerkt, dass die Dichtungen auch direkt auf der Plattenoberfläche angeordnet sein können und auch mit diesen fest verbunden sein können. Die reaktiven und nichtreaktiven Elemente 35 können von der oben beschriebenen Art sein. Die einzelnen Formkörperbausteine 21, 22, 23, 24 können Identifizierer 25 aufweisen, beispielsweise in der Form eines Tags, eines Barcodes oder eins RFID Chips. Damit kann sichergestellt werden, dass sich der richtige Formkörperbaustein an der richtigen Stelle befindet und auch ein automatisierter und robotergestützter Zusammenbau ermöglicht werden. Einzelnen Komponenten des Stapelplattenreaktors 20, insbesondere die einzelnen Formkörperbausteine 21, 22, 23, 24, die Endplatten 29, die Dichtungen 33 und die reaktiven bzw. nichtreaktiven Element 35 können in einem Anpressschritt S30 zusammengepresst werden.

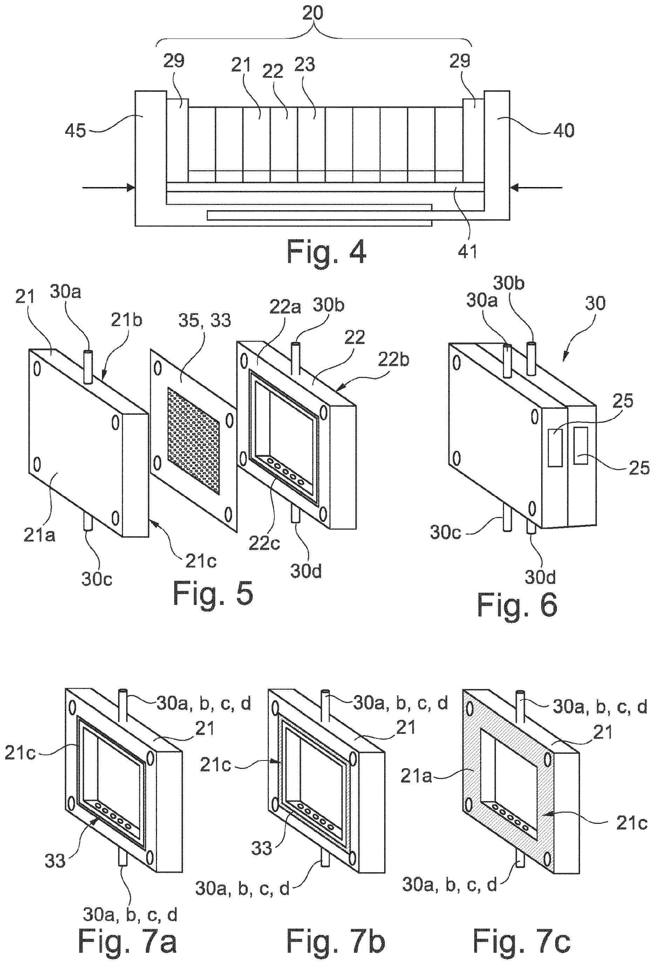

Figur 4 zeigt eine Aufnahmevorrichtung 40 mit einem darin angeordneten Stapelplattenreaktor 20, bei der die einzelnen Formkörperbausteine 21, 22, 23, 24 und die Endplatten 29 von der Aufnahmevorrichtung 40 aufgenommen und positioniert werden können. Dazu kann eine Schiene 41 vorgesehen sein, auf der die Komponenten positioniert verschoben werden können. Die Komponenten Formkörperbausteine 21, 22, 23, 24 und die Endplatten 29 können dabei spezielle Aufnahmen aufweisen, die mit der Schiene 41 in Eingriff stehen und auch an der Schiene gesichert sein. Eine Pressvorrichtung 45 kann dabei die in Figur 3 und Figur 4 gezeigten Komponenten unter einem definierten Druck zusammenpressen und den Anpressdruck während des Prozesses überwachen und steuern. Dazu können aktive Steuerungskomponenten wie Hydraulikelemente (nicht gezeigt) oder auch passive Kompensationskomponenten verwendet werden, die eine Ausdehnungscharakteristik haben, die die Ausdehnungscharakteristik des Stapelplattenreaktors auch über weite Temperaturbereiche kompensiert.

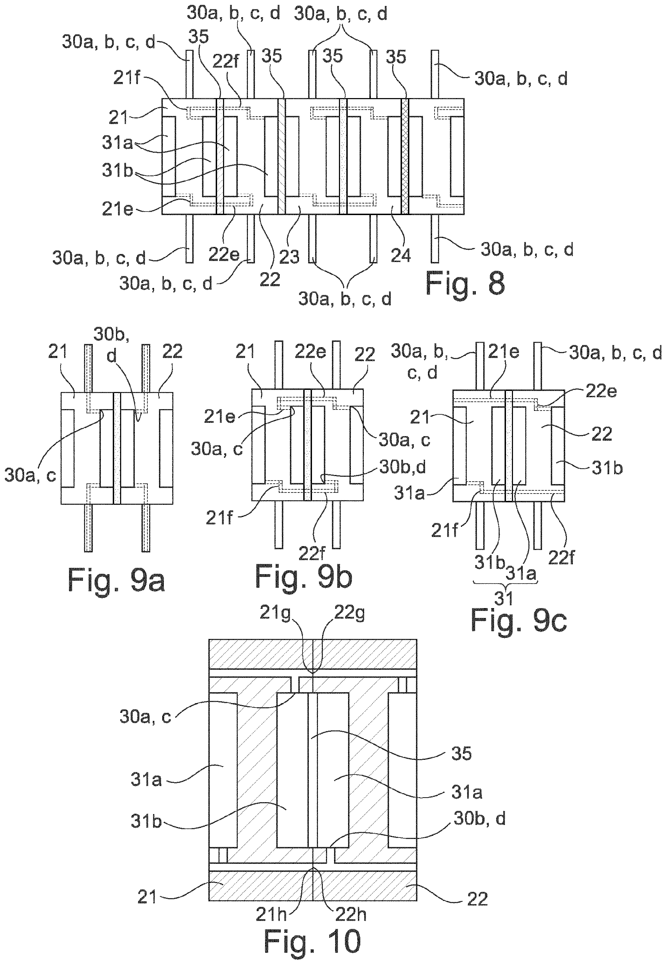

Figur 5 zeigt einen Einzelreaktor 30 in einer Explosionsansicht. Der Einzelreaktor 30 wird dabei, wie in Figur 8 und Figur 9c zu sehen ist, gebildet aus einer Reaktorkammer 31, die sich aus einer primärseitigen Kavität 31a in einem der Formkörperbausteine 21 und einer sekundärseitigen Kavität 31b in einem benachbarten der Formkörperbausteine 22 ergibt. Die Formkörperbausteine 21, 22 weisen dabei jeweils eine Plattenfläche 21a, 21b; 22a, 22b auf. Die Reaktorkammer 31 ist dabei durch das reaktive bzw. nichtreaktive Element 35 geteilt. In der in Figur 5 gezeigten Ausführungsform ist an dem reaktiven bzw. nichtreaktiven Element 35 auch eine Dichtung 33 vorgesehen, die alternativ oder ergänzend auch an den Formkörperbausteinen 21, 22, vorgesehen sein kann, beispielsweise an einer entsprechenden Dichtungsfläche 21c, 22c. Zu und von der Reaktorkammer sind Zu- bzw. Ableitungen vorgesehen, die in die Reaktorkammer münden. Dabei münden in der in Figur 5 gezeigten Ausführungsform die primärseitige Zuleitung 30a und die primärseitige Ableitung 30c in die Kavität 31a des ersten Formkörperbauteils 21, während die sekundärseitige Zuleitung 30b und die sekundärseitige Ableitung 30d in die Kavität 31b des zweiten Formkörperbauteils 22 münden.

Figur 6 zeigt den in Figur 5 gezeigten Einzelreaktor in zusammengebautem Zustand. Die beiden Formkörperbausteine 21, 22 weisen in der in Figur 6 gezeigten Ausführungsform einen Identifizierer 25 auf, beispielsweise in Form eines Barcodes, QR-codes oder eines RFID, der den Formkörperbaustein identifiziert, sodass darüber die Eigenschaften, wie etwa Kavitätsgröße, Anschlusskonfiguration, etc. identifiziert werden kann.

Figur 7a, Figur 7b und Figur 7c zeigen einen Formkörperbaustein 21 mit alternativen Dichtungsanordnungen. Auf bzw. an der Dichtfläche können unterschiedliche Dichtungen 33 bzw. Dichtungsarten vorgesehen sein. In Figur 7a ist eine Liniendichtung illustriert, die eine Abdichtung über eine schnurförmige Dichtung vorsieht. In Figur 7b ist eine breitere Dichtung 33 illustriert, die sich jedoch nicht über Bohrungen der Plattenflache des Formkörperbausteins erstreckt. Figur 7c zeigt eine Flächendichtung 33, die sich bis über die Bohrungen in der Plattenoberfläche erstreckt, sodass etwaige Leitungsverbindungen, die über Mündungen in der Plattenfläche hergestellt werden, ebenfalls mit der Dichtung sowohl nach außen, als auch nach innen zur Kavität hin abgedichtet werden können.

Figur 8 zeigt eine schematische Schnittansicht eines Stapelplattenreaktors 20 mit mehreren Einzelreaktoren. In den Formkörperbausteinen 21, 22, 23, 24 können Leitungsanordnungen 21e, 21f, 22e, 22f vorgesehen sein. Diese Leitungsanordnungen können entweder in den Kavitäten 31a, 31b münden, in den Plattenoberflächen, insbesondere an den aneinander anliegenden Plattenflächen, oder auch an den Randflächen, wobei letzteres nicht gezeigt ist. Die in Figur 8 gezeigten Leitungsanordnungen erlauben es durch eine gegenüberliegende Positionierung der Mündungen der Leitungsanordnungspaare 21e, 22e und 21f, 22f eine Leitungsverbindung von einem Formkörperbaustein in 21 zu einem benachbarten Formkörperbaustein 22 herzustellen. Auf diese Weise können die Reaktorkammern in der hier gezeigten Ausführungsform in Reihe geschaltet werden. Andere Leitungskonfigurationen ermöglichen beispielsweise eine Parallelschaltung, andere wiederum durch eine Verzweigung eine Reihenschaltung von einem Reaktor mit einem parallelverbundenen Reaktorpaar. Durch eine entsprechende Leitungsführung und Verzweigung innerhalb der Formkörperbausteine ist eine beliebige Verschaltung der Einzelreaktoren möglich, ohne die Leitungen extern, d.h. über äußere Leitungen miteinander verbinden zu müssen. Die Leitungsanordnungen können beliebige Geometrien aufweisen, wenn sie beispielweise bei einem 3D-Druck eines Formkörperbausteins vorgesehen werden.

Figur 9a, Figur 9b und Figur 9c zeigen unterschiedliche Geometrien der Leitungsführung in aneinandergrenzenden Formkörperbausteinen. Figur 9a zeigt einen aus zwei Formkörperbausteinen zusammengesetzten Einzelreaktor, bei dem die internen Leitungsanordnungen einerseits in einer Kavität münden und andererseits aus dem Formkörperbaustein seitlich herausgeführt sind, etwa um ein Edukt zuzuführen oder ein Produkt abzuführen. Figur 9b zeigt eine Ausführungsform, bei der jeweils Primärseiten von Reaktoren miteinander und Sekundärseiten miteinander verbunden sind. Figur 9c zeigt eine Ausführungsform, bei der eine Leitung an einem Reaktor vorbeigeführt wird, um beispielsweise einen übernächsten Reaktor zu erreichen.

Figur 10 zeigt eine schematische Schnittansicht eines Einzelreaktors mit einer Konfiguration einer Kopplung der Leitungsmündungen 21g, 22g, 21h, 22h. Hier korrespondieren die Mündungen 21g und 22g, sowie die Mündungen 21h und 22h. In der in Figur 10 gezeigten Konfiguration ist die Leitungsanordnung im Formkörperbaustein 21, 22 jeweils verzweigt, sodass eine Parallelverschaltung der benachbarten Reaktoren ermöglicht wird. Auf diese Weise können von der Leitungsanordnung parallele Zuläufe 30a, 30c bzw. Abläufe 30b, 30d in die bzw. aus den sekundärseitigen Reaktorkammern 31b bzw. primärseitigen Reaktorkammern 31a realisiert werden.

Figur 11 zeigt eine schematische Ansicht einer Anordnung mit mehreren Stapelplattenreaktoren gemäß einer beispielhaften Ausführungsform der Erfindung. Dabei ist eine schematische Darstellung eines Ausschnitts aus der Vorrichtung gezeigt, bei der vier Stapelplattenreaktoren 20 in einer ersten Ofenkammern 11 angeordnet sind. In einer zweiten Ofenkammer 12 sind Flüssigkeitsabscheider 18 angeordnet, die über die Wirkverbindungsleitungen mit den Stapelplattenreaktoren 20 verknüpft sind. Die Abscheider können mit Ventilen gegenüber einem weiteren Ablauf abgesperrt sein. Zur Analyse der Abscheidungsprodukte können die Abscheider 18 über eine Gasleitung 9 mit der Analysevorrichtung 3 verbunden sein.

Figur 12 zeigt eine schematische Darstellung einer Stapelplattenreaktoranordnung, bei der Stapelplattenreaktoren 20 mit wiederum jeweils vier seriell geschalteten Stapelplattenreaktoren 20i, 20ii, 20iii, 20iv versehen sind. Die Stapelplattenreaktoren mit den jeweils vier seriell geschalteten Stapelplattenreaktoren 20i, 20ii, 20iii, 20iv weisen eine gemeinsame Eduktfluidzufuhr auf, die jeweils zu der ersten Reaktorplatte des jeweiligen Stapelplattenreaktors 20i führt. Jeweils die letzte Platte der jeweiligen Stapelplattenreaktoren 20iv stehen mit Flüssigkeitsabscheidern 18 in Wirkverbindung, die wiederum über die Leitungen 9 mit hier nicht gezeigten Analysatoren 3 in Verbindung stehen.

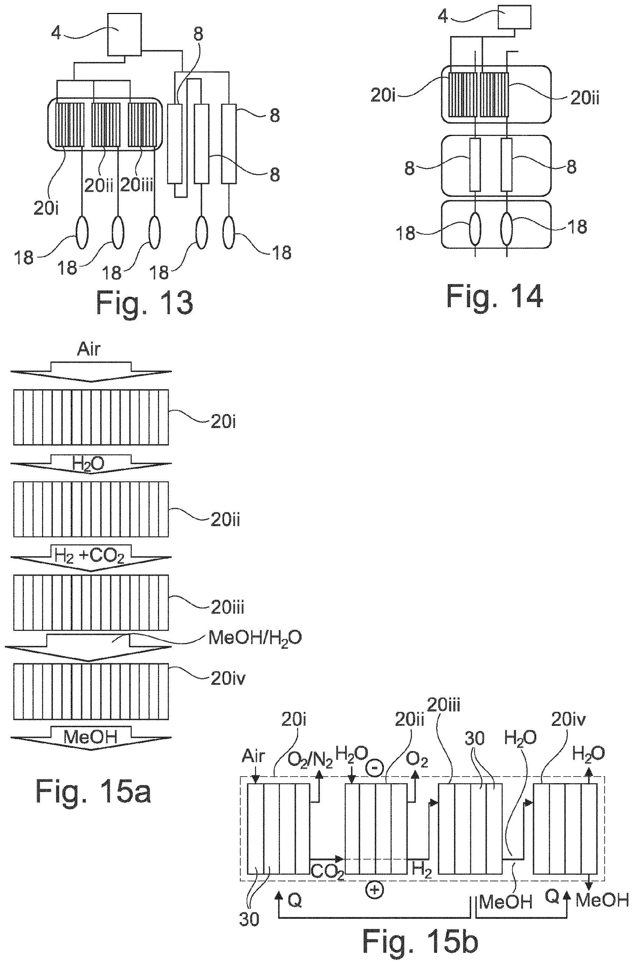

Figur 13 zeigt eine weitere schematische Stapelplattenreaktoranordnung zur Untersuchung von chemischen Prozessen, welche drei Stapelplattenreaktoren 20i, 20ii, 20iii und drei Rohrreaktoren 8 aufweist, wobei die Rohrreaktoren 8 eine serielle Anordnung aufweisen. Die Reaktoren 8, 20i, 20ii, 20iii werden von einer Steuerungsvorrichtung 4 gesteuert. An den Reaktoren können wiederum Abscheider 18 vorgesehen sein, die über Leitungen mit entsprechenden Analysatoren verbunden sein können.

Figur 14 zeigt eine weitere schematische Stapelplattenreaktoranordnung zur Untersuchung von chemischen Prozessen, die eine serielle Schaltung von Reaktoren aufweist, bei der je ein Stapelplattenreaktor 20i, 20ii einem Rohrreaktor 8 vorgeschaltet ist. Dem Rohrreaktor 8 nachgeschaltet sind Flüssigkeitsabscheider 18, so dass zwei parallele Anordnungen vorliegen, die je einen Stapelplattenreaktor 20i, 20ii, einen Rohrreaktor 8 und einen Abscheider 18 aufweisen.

Figur 15a und Figur 15b zeigen, wie ein Prozessablauf, der gemäß Figur 15a je Prozessschritt jeweils einen Stapelreaktor benötigt gemäß Figur 15b durch einen einzigen Stapelreaktor mit einzelnen Sektionen mit unterschiedlichen Funktionen abgearbeitet werden kann.

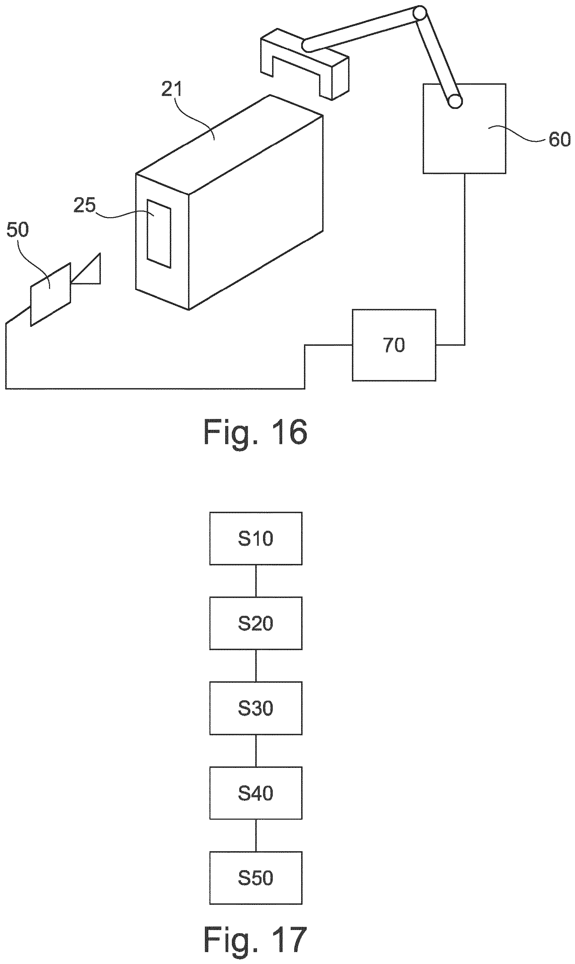

Figur 16 zeigt eine Roboteranordnung zum automatisierten Zusammenbau eines Stapelplattenreaktors. Dabei werden einzelne Formkörperbausteine 21 mit einem Identifizierer 25 versehen, was deren maschinenlesbare Identifizierung ermöglicht. Mit einer Lesevorrichtung 50 kann der Identifizierer gelesen und erkannt werden. Das Ergebnis kann an eine Datenbasis mit einem Bauplan weitergegeben werden, die einem Roboter 60 als Grundlage für einen Kompositionsprozess dient, in dem der Roboter einen Stapelplattenreaktor aus einzelnen Formkörperbausteinen 21 je nach gewünschter Funktion zusammensetzen kann.

Figur 17 zeigt einen schematischen Ablauf des Verfahrens zur Untersuchung von chemischen Prozessen gemäß einer beispielhaften Ausführungsform der Erfindung. Dabei werden die Schritte zum Auswählen S10 eines Betriebsmodus des Stapelplattenreaktors, das entsprechende Konfigurieren S20 des Stapelplattenreaktors und das Pressen S30 der gestapelt aneinander liegenden Formköperbausteine vorgenommen. Anschließend wird ein Einleiten S40 wenigstens eines Eduktes in den Stapelplattenreaktor und ein Steuern S50 der Prozessparameter der Einzelreaktoren vorgenommen, um den Prozess zu steuern.

Das Verfahren kann zumindest eine Verfahrensstufe aufweisen, die aus der Gruppe Gasauftrennungsverfahren, elektrolytische Aufspaltung, Hydrierung , Gasabtrennungsverfahren ausgewählt ist. Sofern nur eine Verfahrensstufe enthalten ist, so kann diese Verfahrensstufe in einer parallelen Anordnung durchgeführt werden, insbesondere ist die Anzahl der parallel durchgeführten Verfahren im Bereich von 2 bis 48, insbesondere von 4 bis 24, insbesondere von 8 bis 20. Sofern die Verfahrensstufen in einer seriellen Anordnung durchgeführt werden, ist es möglich, dass die Anzahl der seriell gekoppelten Verfahrensstufen im Bereich von 2 bis 10 liegt, insbesondere im Bereich von 3 bis 6.

Das Verfahren kann insbesondere zur Untersuchung von chemischen Prozessen verwendet werden, um Membranen zu untersuchen. Insbesondere können bei der Durchführung des Verfahrens Bauelemente verwendet, die aus der Gruppe der multifunktionalen Platten stammen, wobei es sich bei multifunktionalen Platten um Membranen handelt, die katalytische Aktivität aufweisen können, insbesondere Membranen mit katalytisch aktiven Komponenten, katalytisch beschichtete Membranen, mikromaschinell gefertigte Bauteile, mittels 3D-Druck hergestellte Bauteile, und Elemente zur Flussverteilung mit Mikrokanälen.

Es kann ebenfalls ein Computerprogramm auf einem Datenträger zur Steuerung einer erfindungsgemäßen Vorrichtung und zur Durchführung des erfindungsgemäßen Verfahrens bereitgestellt werden.

Ein Verfahren zur Durchführung eines Laborprozesses mit Hilfe einer erfindungsgemäßen Vorrichtung kann die folgenden Schritte aufweisen: Empfangen, durch eine zentrale Steuereinheit, eines Auftrags zur Durchführung eines Laborprozesses; Planen, durch die zentrale Steuereinheit, des Laborprozesses; Auswählen der dafür benötigten Laboreinrichtungen; Anordnen der benötigten Laboreinrichtungen entsprechend des Laborprozesses; Durchführen des Laborprozesses mit Hilfe eines Handhabungssystems; Erheben und Speichern der bei der Durchführung des Laborprozesses erzeugen Daten in einer Datenbank der zentralen Steuereinheit.

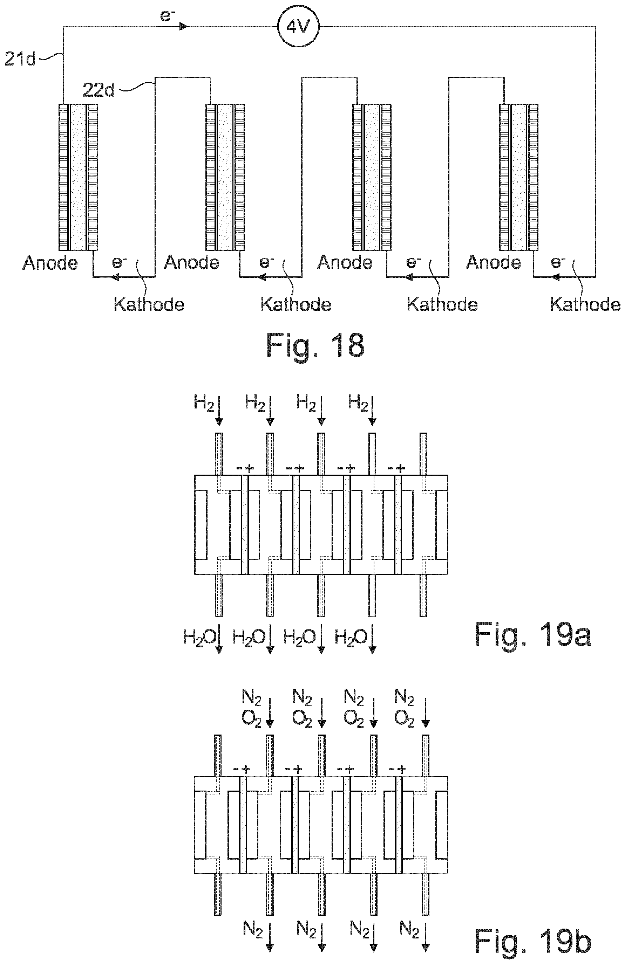

Figur 18 zeigt eine Verschaltung mehrerer Einzelreaktoren bei einem elektrischen Prozess gemäß einer beispielhaften Ausführungsform der Erfindung, bei der mehrere Einzelreaktoren mit Verbindungsleitungen 22d in Reihe miteinander verschaltet sind um Brennstoffzellen bei erhöhter Abgabespannung zu testen. Figur 18 ist dabei ein schematisches Bild, wobei die einzelnen Reaktoren wiederum aus einzelnen aneinander anliegenden Formkörperbausteinen realisiert werden können.

Figur 19a und Figur 19b zeigen ein und denselben Stapelplattenreaktor, jedoch in Schnittansichten verschiedener Ebenen. Figur 19a zeigt einen Prozessablauf für eine erste (linke) Seite der Einzelreaktoren bei der der primären Seite H2 zugeführt wird. Wie Figur 19b zu entnehmen ist wird der Sekundärseite (andere Schnittebene der Zuführungsleitung) N2 und O2 zugeführt. Im Reaktor findet eine Reaktion statt, bei der auf der Primärseite H20 anfällt und auf der Sekundärseite bei Vollumsatz beispielsweise reiner N2 abgeschieden wird. Die primärseitigen Zu- und Abläufe befinden sich in einer Schnittebene, während sich die sekundärseitigen Zu- und Abläufe in einer anderen Schnittebene befinden.

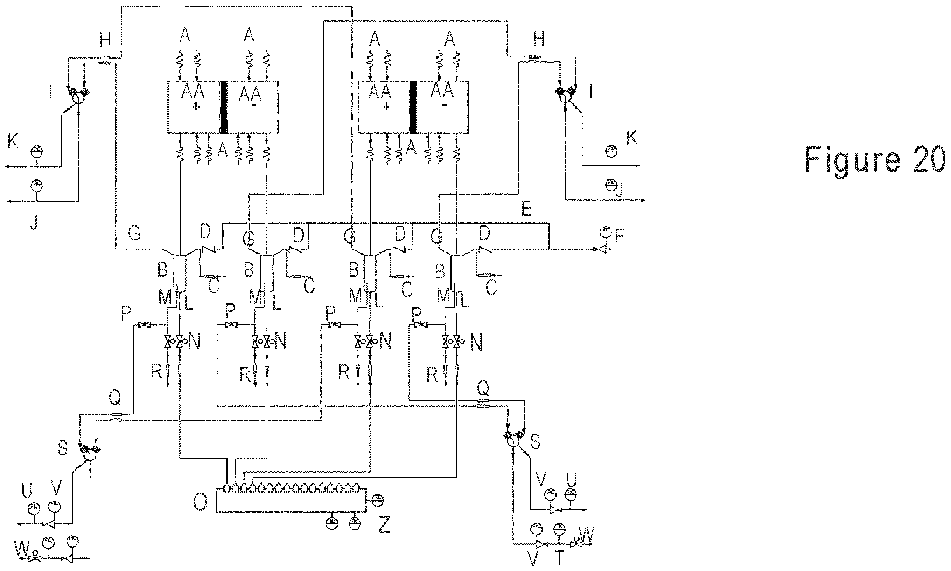

Figur 20 zeigt ein verfahrenstechnisches Fließbild zur Durchführung eines elektrochemischen parallelen Betriebs von Reaktoren, welche geeignet sind für das Screening von Katalysatoren gemäß eines Ausführungsbeispiels der Erfindung. Jede Einzelkassette (AA) (Halbzelle, Kathode, Anode) des EPR ist mit elektrisch nicht leitfähigen Rohrleitungssystem für die Edukte und Produkte angeschlossen (A). Das Rohrleitungssystem hat eine bestimmte Dimension, Innendurchmesser (<1/4") und Länge, die den elektrischen Wiederstand (>10³ Ω, elektrische Leitfähigkeit über lonenleitung) über den Elektrolyten deutlich erhöhen und den Kurzschlussstrom auf einen, für das Experiment, vernachlässigbaren Wert (>10⁻⁴ A) erniedrigen. Materialen für das Rohrleitungssystem können unter anderem Teflon, PEEK, PPS oder andere Materialien mit den geforderten Eigenschaften (elektrisch isolierend, Temperaturbeständigkeit <200°C, Druckbeständigkeit <100barg, chemische Beständigkeit) sein. Der Produktstrom jeder Einzelkassette wird über ein Tauchrohr in einem individuellen Gas/Flüssig-Abscheider geleitet (B). Zusätzlich kann in jedem Gas/Flüssig-Abscheider ein Verdünnungsgas eingeleitet werden (C). Das Verdünnungsgas kann verwendet werden, um den Reaktionsdruck im Reaktorsystem aufzubauen oder um die Zusammensetzung der Gasphase zu verändern, z.B. zur Erniedrigung der Partialdrücke, zur Vermeidung von Kondensation oder um die Gasmatrix für die nachgeschaltete Analytik zu optimieren. Zusätzlich wird in jedem Gas/Flüssig-Abscheider ein Druckhaltegas eingeleitet (D). Die einzelnen Druckhaltegase der Gas/Flüssig-Abscheider sind über Rückschlagklappen miteinander durch eine Sammelleitung verbunden und können miteinander kommunizieren (E). In der Sammelleitung befindet sich ein Druckregler der den Druck in der Sammelleitung und damit auch den Druck in den einzelnen Gas/Flüssig-Abscheidern regelt (F). Eine Kreuzkontamination wird durch die Verwendung der Rückschlagklappen vermieden.

In dem Gas/Flüssig-Abscheider wird die Flüssigphase (Produkt + Elektrolyt + Edukt) von der Gasphase (Produkt + Edukt + Verdünnungsgas + Druckhaltegas) getrennt (B). Die Gasphase entweicht kontinuierlich am Kopf des Gas/Flüssig-Abscheiders (G). Hier befinden sich in jeder Leitung eine Kapillare (Restriktionskapillare) (H), die einen Staudruck erzeugt. Mit Hilfe der variablen Komponenten der Gasphase (Verdünnungsgas + Druckhaltegas), sowie der Auslegung der Restriktionskapillare, kann der Reaktordruck in einem bestimmten Parameterfeld eingestellt werden. Alle Einzelkassetten können durch mindestens eine Verdünnungsgas-Versorgung gespeist werden. Der Volumenstrom an Verdünnungsgas kann mit Hilfe von Kapillartechnologie auf die einzelnen Einzelkassetten gleichmäßig verteilt werden. Mehrere Verdünnungsgas-Versorgungen erhöhen die Flexibilität des Systems. Alle Einzelkassetten sind durch mindestens ein Druckhaltegas, in Kombination mit einer Reaktordruck-Regelung ausgestattet. Mehrere Druckhaltegas und Reaktordruck-Regelungen erhöhen die Flexibilität des Systems. Der Produktstrom (Gasphase) aus den einzelnen Gas/Flüssig-Abscheider wird über die Restriktionskapillaren (H) auf einen niedrigeren Druck entspannt und mit Hilfe eines Selektionsventils auf eine nachgeschaltete Analytik selektiert (I). Der Volumenstrom oder Massenstrom des selektierten Produktstroms wird kontinuierlich gemessen (J).

Der gesammelte Produktstrom (Gasphase), d.h. alle Produktströme außer der selektierte Produktstrom, wird ins Abgas, eine Abgasnachbehandlung oder eine sonstige Aufbereitung geführt. Der Volumenstrom oder Massenstrom des gesammelten Produktstroms wird kontinuierlich gemessen (K).

Die Flüssigphase kann über zwei Ausgänge am Boden (L) und in Bodennähe (M) des Gas/Flüssig-Abscheiders entweichen. In beiden Leitungen befinden sich automatische Absperrventile (N). Über die Entnahmestelle am Boden (L) können automatisch Flüssigproben aus dem Gas/Flüssig-Abscheiders entnommen werden. Durch die Höhe der bodennahen (M) Entnahmestelle (Tauchrohr) im Gas/Flüssig-Abscheiders kann das Probennahmevolumen für die automatische Flüssigprobennahme eingestellt werden. Die Flüssigprobennahme erfolgt in Probengläser, in einer Ausführungsform in ein automatisch gesteuertes und beheiztes (Z) Probennahmesystem (Autosampler) (O). Bei der Probennahme wird die Flüssigprobe über eine Kapillare (R) auf einen niedrigeren Druck entspannt. Die Entnahmestelle in Bodennähe (M) ist mit einem automatischen Absperrventil (N) und einem manuellen Absperrventil ausgestattet (P). Mit Hilfe der manuellen Absperrventile (P) kann das kontinuierliche Sampling vom System abgekoppelt werden. Beim kontinuierlichen Sampling aus den Gas/Flüssig-Abscheiders wird die Flüssigphase aus der bodennahe Entnahmestelle über Kapillaren (Q) auf einen niedrigeren Druck entspannt. Die Kapillaren (Q) können durch zusätzliche Heizungen beheizt werden. Durch Variation der Heizertemperatur kann der kontinuierliche Volumenstrom an Flüssigphase aus dem Gas/Flüssig-Abscheider eingestellt werden. Durch das automatische Absperrventil (N) kann der Gas/Flüssig-Abscheider über eine Kapillare (R), bis zur Höhe des Tauchrohres, entleert werden. Dies ist ein diskontinuierliches Sampling.

Der kontinuierliche Produktstrom (Flüssigphase) aus den einzelnen Gas/Flüssig-Abscheider wird über die Restriktionskapillaren (Q) auf einen niedrigeren Druck entspannt und mit Hilfe eines Selektionsventils auf eine nachgeschaltete Analytik selektiert (S). Der Volumenstrom oder Massenstrom des selektierten Produktstroms (Flüssigphase)wird kontinuierlich gemessen (T). Der kontinuierliche gesammelte Produktstrom (Flüssigphase), d.h. alle Produktströme außer der selektierte Produktstrom, wird in einem Sammelbehälter oder eine sonstige Aufbereitung geführt. Der Volumenstrom oder Massenstrom des gesammelten Produktstroms wird kontinuierlich gemessen (U). Beide Produktströme (Flüssigphase), also der selektierte und der Gesamtstrom, sind jeweils mit einem Druckregler (V) ausgestattet, die den Nachdruck konstant halten. Dies vermeidet Druckstöße, wenn das Separationsventil bewegt wird. Mit Hilfe des Separationsventiles (S), kann der Volumen oder Massenstrom der einzelnen Einzelkassetten in definierten Zeitabständen überprüft werden. Dieser Mechanismus, inkl. der Möglichkeit den Gas/Flüssig-Abscheider diskontinuierlich zu entleeren, soll ein überlaufen des Gas/Flüssig-Abscheider verhindern und einen robusten Betrieb gewährleisten. Für das diskontinuierliche Sampling über das automatische Absperrventil (N), wird vorher das kontinuierliche Sampling für diesen Gas/Flüssig-Abscheider unterbrochen, in dem dieser Gas/Flüssig-Abscheider mit dem Selektionsventil (S) selektiert wird und das automatische Ventil (W) geschlossen wird. Dadurch soll ein ungewollter Gasdurchbruch vermieden werden.

Das diskontinuierliche Sampling, sowie die Probennahme in das Probenahmesystem (O) wird gestoppt, wenn die Flüssigsäule aus dem Gas/Flüssig-Abscheider verdrängt ist und die Gassäule durchbricht. Der Gasdurchbruch wird über das Druckhaltesystem (Druckhaltegas) detektiert. In dieser Ausführungsform können die zwei Gas/Flüssig-Abscheider (z.B: Anode und Kathode) parallel entleert werden, da zwei Druckhaltesysteme vorhanden sind.

### Bezugszeichenliste

- 1: Vorrichtung zum Untersuchen chemischer Prozesse
- 2: Versorgungsmodul
- 3: Analysemodul
- 4: Steuerungsvorrichtung
- 5: Schaltschrank
- 8: Rohrreaktor
- 9: Gasleitung zum Analysemodul
- 10: Ofen
- 11: Ofenkammer
- 12: Ofenkammer
- 18: Abscheider
- 19: Ventil
- 20: Stapelplattenreaktor
- 20i: Stapelplattenreaktor
- 20ii: Stapelplattenreaktor
- 20iii: Stapelplattenreaktor
- 20iv: Stapelplattenreaktor
- 20a: Primärseitige Zuleitung des Stapelplattenreaktors
- 20b: Sekundärseitige Zuleitung des Stapelplattenreaktors
- 20c: Primärseitige Ableitung des Stapelplattenreaktors
- 20d: Sekundärseitige Ableitung des Stapelplattenreaktors
- 21: Formkörperbaustein eines Stapelplattenreaktors
- 21a: Plattenfläche des Formkörperbausteins
- 21b: Plattenfläche des Formkörperbausteins
- 21c: Dichtungsfläche des Formkörperbausteins
- 21d: Elektrische Zuleitung
- 21e: erste Leitungsanordnung
- 21f: zweite Leitungsanordnung
- 21g: Mündung der Leitungsanordnung auf der Plattenfläche
- 21h: Mündung der Leitungsanordnung auf der Plattenfläche
- 22: Formkörperbaustein eines Stapelplattenreaktors
- 22a: Plattenfläche des Formkörperbausteins
- 22b: Plattenfläche des Formkörperbausteins
- 22c: Dichtungsfläche des Formkörperbausteins
- 22d: Elektrische Zuleitung
- 22e: erste Leitungsanordnung
- 22f: zweite Leitungsanordnung
- 22g: Mündung der Leitungsanordnung auf der Plattenfläche
- 22h: Mündung der Leitungsanordnung auf der Plattenfläche
- 23: Formkörperbaustein eines Stapelplattenreaktors
- 24: Formkörperbaustein eines Stapelplattenreaktors
- 25: Identifizierer eines Formkörperbausteins, Barcode
- 29: Endplatten des Stapelplattenreaktors
- 30: Einzelreaktor
- 30a: Primärseitige Zuleitung eines Einzelreaktors
- 30b: Sekundärseitige Zuleitung eines Einzelreaktors
- 30c: Primärseitige Ableitung eines Einzelreaktors
- 30d: Sekundärseitige Ableitung eines Einzelreaktors
- 31: Reaktorkammer eines Einzelreaktors
- 31a: Kavität, primärseitige Kavität
- 31b: Kavität, sekundärseitige Kavität
- 33: Dichtung
- 35: Reaktives Element, reaktive Vorrichtung
- 40: Aufnahmevorrichtung
- 41: Schiene
- 45: Pressvorrichtung
- 50: Lesevorrichtung
- 60: Roboter
- 70: Datenbasis, Bauplan
- S10: Auswählen eines Betriebsmodus des Stapelplattenreaktors
- S20: Konfigurieren des Stapelplattenreaktors
- S30: Pressen der gestapelt aneinander liegenden Formköperbausteine
- S40: Einleiten wenigstens eines Eduktes in den Stapelplattenreaktor
- S50: Steuern der Prozessparameter der Einzelreaktoren

## Patentansprüche

1. Vorrichtung zur Untersuchung von chemischen Prozessen, aufweisend:
einen Ofen (10) mit wenigstens einer Ofenkammer (11),
einen Stapelplattenreaktor (20) mit einer Mehrzahl von nebeneinanderliegenden plattenförmigen Formköperbausteinen (21, 22, 23, 24) und wenigstens einer Zuleitung (20a, 20b) für ein Edukt und wenigstens einer Ableitung (20c, 20d) für ein Produkt, und
eine Anschlussvorrichtung zum Anschluss des Stapelplattenreaktors (20) an wenigstens eine ofenseitige Zuleitung (10a) eines Eduktes und wenigstens eine ofenseitige Ableitung eines Produktes (10c),
wobei die Ofenkammer eine Aufnahmevorrichtung (40) aufweist, die derart ausgestaltet ist, dass sie die Mehrzahl von nebeneinanderliegenden Formköperbausteinen (21, 22, 23, 24) des Stapelplattenreaktors (20) aufnehmen kann,
wobei die Mehrzahl von Formköperbausteinen (21, 22, 23, 24) des Stapelplattenreaktors (20) in der Aufnahmevorrichtung (40) derart gestapelt aneinander liegen, dass sie eine Mehrzahl von Reaktorkammern (31) mit jeweils einem Zulauf (30a, 30b) für ein Edukt und wenigstens einem Ablauf (30c, 30d) für ein Produkt, sowie einer von einer reaktiven Vorrichtung und einer nicht reaktiven Vorrichtung (35) aufweisen, die jeweils einen Einzelreaktor (30) bilden,
wobei die Aufnahmevorrichtung (40) eine Pressvorrichtung (45) aufweist, die derart ausgestaltet ist, dass sie die Mehrzahl der gestapelt aneinander liegenden Formköperbausteine (21, 22, 23, 24) des Stapelplattenreaktors (20) in Richtung der Stapelrichtung verpressen kann,
wobei die Mehrzahl von Reaktorkammern (31) wahlweise parallel und/oder in Reihe geschaltet sein können.

2. Vorrichtung zur Untersuchung von chemischen Prozessen nach Anspruch 1, wobei die Vorrichtung (1) ein Versorgungsmodul (2) zur Bereitstellung der Ressourcen für die Einstellung von Prozessparametern, ein Analysenmodul (3) zur Analyse von wenigstens einem Produkt, und eine Steuerungsvorrichtung (4) zur Steuerung der Prozessparameter umfasst, wobei die Steuerungsvorrichtung (4) insbesondere derart ausgestaltet ist, dass sie wenigstens einen der Prozessparameter für wenigstens einen der Einzelreaktoren (30) gesondert steuern kann.

3. Vorrichtung zur Untersuchung von chemischen Prozessen nach einem der vorhergehenden Ansprüche, wobei die Aufnahmevorrichtung (40) eine Schiene (41) aufweist, die derart ausgestaltet ist, dass sie die Formkörperbausteine (21, 22, 23, 24) in einer vorbestimmten Ausrichtung und Position aufnehmen kann, wobei die Schiene (41) der Aufnahmevorrichtung (40) insbesondere eine Positionierungshilfe der Pressvorrichtung (45) darstellt.

4. Vorrichtung zur Untersuchung von chemischen Prozessen nach einem der vorhergehenden Ansprüche, wobei die Aufnahmevorrichtung (40) dazu ausgeführt ist eine Wärmeausdehnung des Stapelplattenreaktors zu kompensieren.

5. Vorrichtung zur Untersuchung von chemischen Prozessen nach einem der vorhergehenden Ansprüche, wobei der Stapelplattenreaktor eine Beheizungsvorrichtung aufweist, wobei die Beheizungsvorrichtung derart ausgelegt ist, dass sie den Stapelplattenreaktor (20) erwärmen kann und dadurch eine Wärmeausdehnung des Stapelplattenreaktors (20) hervorruft, die den Stapelplattenreaktor (20) derart in die Aufnahmevorrichtung (40) verpresst, dass eine Dichtungsgeometrie (21c, 22c) der jeweiligen Formkörperbausteine (21, 22) gegeneinander abdichten.

6. Vorrichtung zur Untersuchung von chemischen Prozessen nach einem der vorangegangenen Ansprüche, wobei die Vorrichtung (1) wenigstens einen Abscheider (18) aufweist, der mit wenigstens einem der Einzelreaktoren (30) und/oder reaktiven Elementen (35) eines Einzelreaktors in Wirkverbindung steht, wobei der wenigstens eine Abscheider (18) insbesondere in einer Ofen-kammer (12) angeordnet ist, die abgetrennt ist von der Ofenkammer (11), in der der Stapelplattenreaktor angeordnet ist.

7. Vorrichtung zur Untersuchung von chemischen Prozessen nach einem der vorangegangenen Ansprüche, wobei die Vorrichtung eine Leseeinheit (50) zum Lesen von auf den Formkörperbausteinen (21, 22, 23, 24) vorgesehenen Identifizierern (25) und einen Roboter (60) aufweist,
wobei die Leseeinheit (50) derart ausgeführt ist, dass sie auf den Formkörperbausteinen (21, 22, 23, 24) vorgesehene Identifizierer (25) lesen kann,
wobei der Roboter (60) derart ausgeführt ist, dass er auf der Grundlage eines vorgebbaren strukturellen Bauplans oder funktionellen Bauplans (70) für eine vorgesehene Funktionalität des Stapelplattenreaktors (20) durch die Leseeinheit (50) identifizierte Formkörperbausteine (21, 22, 23, 24) zusammensetzt.

8. Stapelplattenreaktor zur Verwendung in einer Vorrichtung (1) gemäß einem der Ansprüche 1 bis 7, wobei der Stapelplattenreaktor (20) aufweist:
eine Mehrzahl von nebeneinanderliegenden plattenförmigen Formköperbausteinen (21, 22, 23, 24);
wenigstens eine Zuleitung (20a, 20b) für ein Edukt,
wenigstens eine Ableitung (20c, 20d) für ein Produkt, und
wobei die Mehrzahl von Formköperbausteinen (21, 22, 23, 24) des Stapelplattenreaktors (20) gestapelt aneinander liegen,
wobei die Mehrzahl der gestapelt aneinander liegenden Formköperbausteine (21, 22, 23, 24) in Richtung der Stapelrichtung verpressbar sind, wobei jeder der Formkörperbausteine (21, 22, 23, 24) wenigstens eine Kavität (31a, 31b) einer Plattenfläche (21a, 21b) des Formkörpers (21) mit einer umlaufenden Dichtungsfläche (21c) um die Kavität (31a, 31b) herum aufweist und wenigstens einen von einem Zulauf (30a, 30b) für ein Edukt und einem Ablauf (30c, 30d) für ein Produkt aufweist, der in der Kavität (31a, 31b) mündet, derart, dass die Kavitäten (31a, 31b) zweier benachbarter Formkörper (21, 22) im zueinander gewandten und zusammengebauten Zustand eine Reaktorkammer (31) bilden, wobei zwischen zwei benachbarten Formkörpern (21, 22) eine reaktive Vorrichtung (35) angeordnet ist.

9. Stapelplattenreaktor gemäß Anspruch 8, wobei die reaktive Vorrichtung (35) wenigstens eines Formkörperpaares ein Katalysator ist und wenigstens eine der beiden Formkörper (21, 22) des Formkörperpaares eine elektrische Zuleitung (21d, 22d) zu dem Katalysator aufweist, um den Katalysator elektrisch anzusteuern.

10. Stapelplattenreaktor gemäß einem der Ansprüche 8 und 9, wobei jeder der Formkörperbausteine (21, 22, 23, 24) wenigstens eine Leitungsanordnung (21e, 22e) aufweist mit
wenigstens einer Mündung (21g, 21h, 22g, 22h), die auf der Plattenfläche (21a, 21b, 22a, 22b) mit der Kavität (31a, 31b) mündet, sodass Leitungsanordnungen (21e, 22e) zweier kavitätsseitig aneinander liegenden Formkörper (21, 22) über jeweilige Mündungen (21g, 21h, 22g, 22h) miteinander verbunden sind, und
wenigstens einer von einer Mündung (21g, 21h, 22g, 22h), die auf der der Plattenfläche (21a, 21b) mit der Kavität (31a, 31b) gegenüberliegenden Plattenfläche (21a, 21b, 22a, 22b) mündet, und einer Mündung (30a, 30b, 30c, 30d), die in die Kavität (31a, 31b) mündet.

11. Stapelplattenreaktor gemäß einem der Ansprüche 8 bis 10, wobei wenigstens ein Teil der Formkörperbausteine (21, 22, 23, 24) einen insbesondere maschinenlesbaren Identifizierer (25) aufweisen, der den Formkörperbaustein (21, 22, 23, 24) hinsichtlich einer Geometrie seiner Leitungsanordnung (21e, 21f, 22e, 22f) identifiziert.

12. Stapelplattenreaktor gemäß einem der Ansprüche 8 bis 11, wenigstens ein Teil der Formkörperbausteine (21, 22, 23, 24) eine erste Leitungsanordnung (21e, 21f) aufweist, die einer Parallelschaltung nebeneinanderliegender Reaktorkammern (31) dient, und eine zweite Leitungsanordnung (21f, 22f) aufweist, die einer Reihenschaltung nebeneinanderliegender Reaktorkammern (31) dient, wobei die erste und zweite Leitungsanordnung (21e, 22e, 21f, 22f) derart in dem jeweiligen Formkörperbaustein (21, 22) angeordnet sind, dass in einer ersten Orientierung des Formkörperbausteins (21) die erste Leitungsanordnung (21e) mit einer entsprechenden Leitungsanordnung (22e) eines benachbarten Formkörperbaustein (22) verbunden und aktiv ist und in einer zweiten Orientierung des Formkörperbausteins (21) die zweite Leitungsanordnung (21f) mit einer entsprechenden Leitungsanordnung (22f) eines benachbarten Formkörperbausteins (22) verbunden und aktiv ist.

13. Verfahren zur Untersuchung von chemischen Prozessen unter Verwendung einer Vorrichtung gemäß einem der Ansprüche 1 bis 7, wobei das Verfahren aufweist:
Auswählen (S10) eines Betriebsmodus des Stapelplattenreaktors (20) aus einem Parallelbetrieb, einem Reihenbetrieb oder einem gemischten Parallel- und Reihenbetrieb der Einzelreaktoren (30) des Stapelplattenreaktors (20),
Konfigurieren (S20) des Stapelplattenreaktors (20) durch Stapeln der Formkörperbausteine (21, 22, 23, 24), gemäß des ausgewählten Betriebsmodus,
Pressen (S30) der gestapelt aneinander liegenden Formköperbausteine (21, 22, 23, 24) des Stapelplattenreaktors (20) in Richtung der Stapelrichtungen,
Einleiten (S40) wenigstens eines Eduktes in den Stapelplattenreaktor (20),
Steuern (S50) der Prozessparameter der Einzelreaktoren (30) gemäß dem gewählten Betriebsmodus,
wobei das durch wenigstens einen Einzelreaktor (30) durchgeführte Verfahren ausgewählt ist aus einer Gruppe, bestehend aus einem Gasauftrennungsverfahren, einer elektrolytischen Aufspaltung, einer Hydrierung , einem Gasabtrennungsverfahren, einer Umsetzung von elektrischer Energie in chemische Wertprodukte, insbesondere Power-to-Gas oder Power-to-Liquid, einer Umsetzung von chemischer Bindungsenergie in elektrisch verwendbare Energie, einer Unterstützung katalytischer Prozesse durch Aufbringen eines elektrischen Feldes zur Reduzierung der Aktivierungsenergie, einer heterogenen Katalyse und einer heterogenen Gasphasenkatalyse.

14. Verfahren zur Untersuchung von chemischen Prozessen gemäß Anspruch 13, wobei für die einzelnen Verfahrensstufen wenigstens einer der Prozessparameter gewählt wird aus dem Prozessparameter Temperatur im Bereich von 273,15 bis 1273,15 K, insbesondere im Bereich von 298,15 bis 1073,15 K, weiter insbesondere bei einer Temperatur im Bereich von 373,15 - 873,15 K, und dem Prozessparameter Druck im Bereich von 0,05 bis 500 bara, insbesondere im Bereich von 0,1 bis 300 bara, weiter insbesondere im Bereich von 1 bis 250 bara.

15. Verfahren zur Untersuchung von chemischen Prozessen gemäß einem der Ansprüche 13 bis 14, wobei das Verfahren in unterschiedlichen Konfigurationen durchgeführt werden kann, wobei die Konfigurationen ausgewählt sind aus einer Gruppe bestehend aus Screening-Konfiguration, integralen Prozessführung zur Realisierung von Folgeprozessen, und Konfiguration mit Hochskalierung des Maßstabs einzelner Prozessschritte oder Folgen von Prozessschritten und Produktrückführung zur Erhöhung der Produktausbeute, und bzw. oder zur Untersuchung von Membranen die reaktiven Elemente (35) ausgewählt werden aus einer Gruppe bestehend aus multifunktionalen Platten in Form von Membranen, die katalytische Aktivität aufweisen, Membranen mit katalytisch aktiven Komponenten, und katalytisch beschichtete Membranen, sowie gestapelten Membranen bei denen jede Membranfläche eine bestimmte Eigenschaft besitzt.

## Claims

1. An apparatus for studying chemical processes, having:
an oven (10) having at least one oven chamber (11),
a stacked plate reactor (20) having a multitude of mutually adjacent plate-shaped building blocks (21, 22, 23, 24) and at least one feed (20a, 20b) for a reactant and at least one drain (20c, 20d) for a product, and
a connection device for connection of the stacked plate reactor (20) to at least one oven-side feed (10a) for a reactant and at least one oven-side drain for a product (10c),
wherein the oven chamber has a receiving device (40) configured such that it can accommodate the multitude of mutually adjacent shaped building blocks (21, 22, 23, 24) of the stacked plate reactor (20),
wherein the multitude of shaped building blocks (21, 22, 23, 24) of the stacked plate reactor (20) in the receiving device (40) are stacked one on top of another in such a way that they form a multitude of reactor chambers (31) each with a feed (30a, 30b) for a reactant and at least one drain (30c, 30d) for a product, and one of a reactive device and a nonreactive device (35) that each form an individual reactor (30),
wherein the receiving device (40) has a press device (45) configured such that it can compress the multitude of shaped building blocks (21, 22, 23, 24), stacked one on top of another, of the stacked plate reactor (20) in stacking direction,
wherein the multitude of reactor chambers (31) may electively be connected in parallel and/or in series.

2. The apparatus for studying chemical processes according to claim 1, wherein the apparatus (1) comprises a supply module (2) for providing resources for the adjustment of process parameters, an analysis module (3) for analysis of at least one product, and a control device (4) for control of the process parameters, wherein the control device (4) is especially configured such that it can separately control at least one of the process parameters for at least one of the individual reactors (30) .

3. The apparatus for studying chemical processes according to any of the preceding claims, wherein the receiving device (40) has a rail (41) configured such that it can accommodate the shaped building blocks (21, 22, 23, 24) in a predetermined alignment and position, wherein the rail (41) of the receiving device (40) especially constitutes a positioning aid for the press device (45).

4. The apparatus for studying chemical processes according to any of the preceding claims, wherein the receiving device (40) is designed to compensate for thermal expansion of the stacked plate reactor.

5. The apparatus for studying chemical processes according to any of the preceding claims, wherein the stacked plate reactor has a heating device, wherein the heating device is designed such that it can heat the stacked plate reactor (20) and hence causes thermal expansion of the stacked plate reactor (20) that compresses the stacked plate reactor (20) into the receiving device (40) in such a way that a sealing geometry (21c, 22c) seals the respective shaped building blocks (21, 22) with respect to one another.

6. The apparatus for studying chemical processes according to any of the preceding claims, wherein the apparatus (1) has at least one separator (18) functionally connected to at least one of the individual reactors (30) and/or reactive elements (35) of an individual reactor, wherein the at least one separator (18) is especially disposed in an oven chamber (12) isolated from the oven chamber (11) in which the stacked plate reactor is disposed.

7. The apparatus for studying chemical processes according to any of the preceding claims, wherein the apparatus has a reader unit (50) for reading identifiers (25) provided on the shaped building blocks (21, 22, 23, 24) and a robot (60),
wherein the reader unit (50) is designed such that it can read identifiers (25) provided on the shaped building blocks (21, 22, 23, 24),
wherein the robot (60) is designed such that it assembles the shaped building blocks (21, 22, 23, 24) identified by the reader unit (50) on the basis of a definable structural build plan or functional build plan (70) for an intended functionality of the stacked plate reactor (20).

8. A stacked plate reactor for use in an apparatus (1) according to any of claims 1 to 7, wherein the stacked plate reactor (20) has:
a multitude of mutually adjacent plate-shaped building blocks (21, 22, 23, 24);
at least one feed (20a, 20b) for a reactant,
at least one drain (20c, 20d) for a product, and
wherein the multitude of shaped building blocks (21, 22, 23, 24) of the stacked plate reactor (20) are stacked one on top of another,
wherein the multitude of shaped building blocks (21, 22, 23, 24) stacked one on top of another are compressible in stacking direction, wherein each of the shaped building blocks (21, 22, 23, 24) has at least one cavity (31a, 31b) on a plate surface (21a, 21b) of the shaped block (21) with a circumferential sealing surface (21c) around the cavity (31a, 31b) and at least one of a feed (30a, 30b) for a reactant and a drain (30c, 30d) for a product that opens into the cavity (31a, 31b) in such a way that the cavities (31a, 31b) of two adjacent shaped blocks (21, 22) in the mutually facing and assembled state form a reactor chamber (31), wherein a reactive device (35) is disposed between two adjacent shaped blocks (21, 22) .

9. The stacked plate reactor according to claim 8, wherein the reactive device (35) of at least one pair of shaped blocks is a catalyst and at least one of the two shaped blocks (21, 22) of the pair of shaped blocks has an electrical feed (21d, 22d) to the catalyst in order to electrically actuate the catalyst.

10. The stacked plate reactor according to either of claims 8 and 9, wherein each of the shaped building blocks (21, 22, 23, 24) has at least one conduit arrangement (21e, 22e) having
at least one opening (21g, 21h, 22g, 22h) that opens on the plate surface (21a, 21b, 22a, 22b) with the cavity (31a, 31b), such that conduit arrangements (21e, 22e) of two shaped blocks (21, 22) alongside one another on the cavity side are connected to one another via respective openings (21g, 21h, 22g, 22h), and
at least one of an opening (21g, 21h, 22g, 22h) that opens on the opposite plate surface (21a, 21b, 22a, 22b) from the plate surface (21a, 21b) with the cavity (31a, 31b), and an opening (30a, 30b, 30c, 30d) that opens into the cavity (31a, 31b).

11. The stacked plate reactor according to any of claims 8 to 10, wherein at least some of the shaped building blocks (21, 22, 23, 24) have an identifier (25), especially one that is machine-readable, which identifies the shaped building block (21, 22, 23, 24) with regard to a geometry of its conduit arrangement (21e, 21f, 22e, 22f) .

12. The stacked plate reactor according to any of claims 8 to 11, wherein at least some of the shaped building blocks (21, 22, 23, 24) have a first conduit arrangement (21e, 21f) that serves for parallel connection of mutually adjacent reactor chambers (31), and a second conduit arrangement (21f, 22f) that serves for series connection of mutually adjacent reactor chambers (31), wherein the first and second conduit arrangements (21e, 22e, 21f, 22f) are arranged in the respective shaped building block (21, 22) in such a way that, in a first orientation of the shaped building block (21), the first conduit arrangement (21e) is connected to a corresponding conduit arrangement (22e) of an adjacent shaped building block (22) and is active and, in a second orientation of the shaped building block (21), the second conduit arrangement (21f) is connected to a corresponding conduit arrangement (22f) of an adjacent shaped building block (22) and is active.

13. A method of studying chemical processes using an apparatus according to any of claims 1 to 7, wherein the method comprises:
choosing (S10) a mode of operation of the stacked plate reactor (20) from parallel operation, series operation or mixed parallel and series operation of the individual reactors (30) of the stacked plate reactor (20),
configuring (S20) the stacked plate reactor (20) by stacking the shaped building blocks (21, 22, 23, 24) according to the chosen mode of operation,
pressing (S30) the shaped building blocks (21, 22, 23, 24), stacked one on top of another, of the stacked plate reactor (20) in stacking direction,
introducing (S40) at least one reactant into the stacked plate reactor (20),
controlling (S50) the process parameters of the individual reactors (30) according to the chosen mode of operation,
wherein the method conducted by at least one individual reactor (30) is selected from the group consisting of a gas fractionation method, an electrolytic splitting, a hydrogenation, a gas removal method, a conversion of electrical energy to chemical products of value, especially power-to-gas or power-to-liquid, a conversion of chemical binding energy to electrically usable energy, an assistance of catalytic processes by application of an electrical field for reduction of the activation energy, a heterogeneous catalysis and a heterogeneous gas phase catalysis.

14. The method of studying chemical processes according to claim 13, wherein, for the individual process stages, at least one of the process parameters is chosen from the process parameter of temperature within the range from 273.15 to 1273.15 K, especially within the range from 298.15 to 1073.15 K, more especially at a temperature in the range of 373.15-873.15 K, and the process parameter of pressure within the range from 0.05 to 500 bara, especially within the range from 0.1 to 300 bara, more especially in the range of 1 to 250 bara.

15. The method of studying chemical processes according to either of claims 13 and 14, wherein the method can be conducted in different configurations, wherein the configurations are selected from a group consisting of screening configuration, integral process regime for implementation of subsequent processes, and configuration with upscaling of individual process steps or sequences of process steps, and product recycling to increase the product yield, and/or, for examination of membranes, the reactive elements (35) are selected from a group consisting of multifunctional plates in the form of membranes that have catalytic activity, membranes having catalytically active components, and catalytically coated membranes, and also stacked membranes in which each membrane surface has a particular property.

## Revendications

1. Dispositif d'étude de processus chimiques, comprenant :
un four (10) avec au moins une chambre de four (11),
un réacteur à empilement de plaques (20), avec un grand nombre de composants moulés (21, 22, 23, 24) en forme de plaque disposés les uns à côté des autres, et au moins une conduite d'amenée (20a, 20b) pour une matière de charge et au moins une conduite de décharge (20c, 20d) pour un produit, et
un dispositif de raccordement pour raccorder le réacteur à empilement de plaques (20) à au moins une conduite d'amenée (10a) côté four d'une matière de charge et à au moins une conduite de décharge côté four d'un produit (10c),
dans lequel la chambre de four comprend un dispositif de logement (40), qui est agencé de façon à pouvoir loger le grand nombre de composants moulés (21, 22, 23, 24) disposés les uns à côté des autres du réacteur à empilement de plaques (20),
dans lequel le grand nombre de composants moulés (21, 22, 23, 24) du réacteur à empilement de plaques (20) sont disposés dans le dispositif de logement (40) en étant empilés les uns contre les autres, de façon qu'ils comportent un grand nombre de chambres de réaction (31) ayant chacune une amenée (30a, 30b) pour une matière de charge et au moins une évacuation (30c, 30d) pour un produit, ainsi qu'un parmi un dispositif réactif et un dispositif non réactif (35), dont chacun forme un réacteur individuel (30),
dans lequel le dispositif de logement (40) comprend un dispositif de pressage (45), qui est agencé de façon à pouvoir presser dans la direction de l'empilement le grand nombre des composants moulés (21, 22, 23, 24), empilés les uns à côté des autres, du réacteur à empilement de plaques (20),
dans lequel le grand nombre de chambres de réacteur (31) peuvent être montés au choix en parallèle et/ou en série.

2. Dispositif d'étude de processus chimiques selon la revendication 1, le dispositif (1) comprenant un module d'alimentation (2) pour fournir les ressources nécessaires à l'ajustement de paramètres de processus, un module d'analyse (3) pour analyser au moins un produit, et un dispositif de commande (4) pour commander les paramètres de processus, le dispositif de commande (4) étant en particulier agencé de façon à pouvoir commander séparément au moins l'un des paramètres de processus pour au moins l'un des réacteurs individuels (30).

3. Dispositif d'étude de processus chimiques selon l'une des revendications précédentes, dans lequel le dispositif de logement (40) comprend un rail (41), qui est agencé de façon à pouvoir loger les composants moulés (21, 22, 23, 24) selon une orientation et dans une position prédéfinies, le rail (41) du dispositif de logement (40) représentant en particulier un auxiliaire de positionnement du dispositif de pressage (45).

4. Dispositif d'étude de processus chimiques selon l'une des revendications précédentes, dans lequel le dispositif de logement (40) est réalisé de façon à compenser une dilatation thermique du réacteur à empilement de plaques.

5. Dispositif d'étude de processus chimiques selon l'une des revendications précédentes, dans lequel le réacteur à empilement de plaques comprend un dispositif de chauffage, le dispositif de chauffage étant conçu de façon à pouvoir chauffer le réacteur à empilement de plaques (20), ce qui provoque une dilatation thermique du réacteur à empilement de plaques (20), qui va presser le réacteur à empilement de plaques (20) dans le dispositif de logement (40) de façon à étanchéifier l'une contre l'autre des géométries d'étanchéité (21c, 22c) de chacun des composants moulés (21, 22).

6. Dispositif d'étude de processus chimiques selon l'une des revendications précédentes, le dispositif (1) comprenant au moins un séparateur (18) qui est en communication opérationnelle avec au moins l'un des réacteurs individuels (30) et/ou les éléments réactifs (35) d'un réacteur individuel, l'au moins un séparateur (18) étant disposé en particulier dans une chambre de four (12), qui est séparée de la chambre de four (11) qui est disposée dans le réacteur à empilement de plaques.

7. Dispositif d'étude de processus chimiques selon l'une des revendications précédentes, le dispositif comprenant une unité de lecture (50) pour lire des identificateurs (25) prévus sur les composants moulés (21, 22, 23, 24) et un robot (60),
dans lequel l'unité de lecture (50) est réalisée de façon à pouvoir lire des identificateurs (25) prévus sur les composants moulés (21, 22, 23, 24),
dans lequel le robot (60) est réalisé de façon à réunir, sur la base d'un plan de construction structurel ou d'un plan de construction fonctionnel (70) pouvant être prédéfini, des composants moulés (21, 22, 23, 24) identifiés par l'unité de lecture (60) pour une fonctionnalité prévue du réacteur à empilement de plaques (20).

8. Réacteur à empilement de plaques pour utilisation dans un dispositif (1) selon l'une des revendications 1 à 7, le réacteur à empilement de plaques (20) comprenant :
un grand nombre de composants moulés (21, 22, 23, 24) en forme de plaque, disposés les uns à côté des autres ;
au moins une conduite d'alimentation (20a, 20b) pour une matière de charge,
au moins une conduite de décharge (20c, 20d) pour un produit, et
dans lequel le grand nombre de composants moulés (21, 22, 23, 24) du réacteur à empilement de plaques (20) sont disposés empilés les uns contre les autres,
dans lequel le grand nombre des composants moulés (21, 22, 23, 24) disposés empilés les uns contre les autres peuvent être pressés dans la direction de l'empilement, chacun des composants moulés (21, 22, 23, 24) comportant au moins une cavité (31a, 31b) pour une surface de plaque (21a, 21b) de l'objet moulé (21), avec une surface d'étanchéité entourant la cavité (31a, 31b), et comprenant au moins l'une parmi une amenée (30a, 30b) pour une matière de charge et une évacuation (30c, 30d) pour un produit, qui débouche dans la cavité (31a, 31b) de telle sorte que les cavités (31a, 31b) de deux objets moulés voisins (21, 22), dans l'état dans lequel ils sont dirigés l'un vers l'autre et sont construits ensemble, forment une chambre de réacteur (31), un dispositif réactif (35) étant disposé entre deux objets moulés voisins (21, 22).

9. Réacteur à empilement de plaques selon la revendication 8, dans lequel le dispositif réactif (35) d'au moins une paire d'objets moulés est un catalyseur, et au moins l'un des deux objets moulés (21, 22) de la paire d'objets moulés comprend une ligne électrique (21d, 22d) allant vers le catalyseur, pour exciter électriquement le catalyseur.

10. Réacteur à empilement de plaques selon l'une des revendications 8 et 9, dans lequel chacun des composants moulés (21, 22, 23, 24) comprend au moins un agencement de conduites (21e, 22e), avec
au moins une embouchure (21g, 21h, 22g, 22h), qui débouche sur la surface de plaque (21a, 21b, 22a, 22b) comportant la cavité (31a, 31b) de façon que les agencements de conduites (21e, 22e) de deux objets moulés (21, 22) disposés l'un contre l'autre côté cavité soient reliés l'un à l'autre par des embouchures respectives (21g, 21h, 22g, 22h), et
au moins l'une parmi une embouchure (21g, 21h, 22g, 22h) qui débouche sur la surface de plaque (21a, 21b, 22a, 22b) opposée à la surface de plaque (21a, 21b) comportant la cavité (31a, 31b), et d'une embouchure (30a, 30b, 30c, 30d) qui débouche dans la cavité (31a, 31b).

11. Réacteur à empilement de plaques selon l'une des revendications 8 à 10, dans lequel au moins une partie des composants moulés (21, 22, 23, 24) comporte un identificateur (25) en particulier lisible par une machine, qui identifie le composant moulé (21, 22, 23, 24) pour ce qui est d'une géométrie de son agencement de conduites (21e, 21f, 22e, 22f).

12. Réacteur à empilement de plaques selon l'une des revendications 8 à 11, dans lequel au moins une partie des composants moulés (21, 22, 23, 24) comprend un agencement de conduites (21e, 21f), qui sert à un montage en parallèle de chambres de réacteur (31) disposées les unes à côté des autres et comprend un deuxième agencement de conduites (21f, 22f), qui sert de montage série de chambres de réacteur (31) disposées les unes à côté des autres, le premier et le deuxième agencements de conduites (21e, 21f, 22e, 22f) étant disposés dans le composants moulés respectifs (21, 22) de telle sorte que, dans une première orientation du composants moulés (21), le premier agencement de conduites est relié à un agencement de conduites correspondant (22e) d'un composé moulé voisin (22) et est actif et, dans une deuxième orientation du composé moulé (21), le deuxième agencement de conduites (21f) est relié à un agencement de conduites correspondant (22f) d'un composé moulé voisin (22) et est actif.

13. Procédé d'étude de processus chimiques par utilisation d'un dispositif selon l'une des revendications 1 à 7, le procédé comprenant :
la sélection (S10) d'un mode de marche d'un réacteur à empilement de plaques (20) parmi une marche en parallèle, une marche en série et une marche mixte parallèle et série des réacteurs individuels (30) du réacteur à empilement de plaques (20),
la configuration (S20) du réacteur à empilement de plaques (20) par empilement des composants moulés (21, 22, 23, 24), conformément au mode de marche sélectionné,
le pressage (S30) des composants moulés (21, 22, 23, 24) disposés les uns à côté des autres du réacteur à empilement de plaques (20) dans la direction des plaques,
l'introduction (S40) d'au moins une matière de charge dans réacteur à empilement de plaques (20),
la commande (S50) des paramètres de processus des réacteurs individuels (30) en fonction du mode de marche sélectionné,
dans lequel le procédé mis en œuvre par l'au moins un réacteur individuel (30) est choisi dans le groupe consistant en un procédé de séparation de gaz, une dissociation électrolytique, une hydrogénation, un procédé de séparation de gaz, une conversion d'énergie électrique en des produits chimiques de valeur, en particulier électricité-gaz ou électricité-liquide, une conversion d'énergie de liaison chimique en énergie utilisable en électricité, un soutien à des processus catalytiques par application d'un champ électrique dans le but de réduire une énergie d'activation, une catalyse hétérogène et une catalyse hétérogène en phase gazeuse.

14. Procédé d'étude de processus chimiques selon la revendication 13, dans lequel, pour les étages individuels du procédé, au moins l'un des paramètres de processus est choisi parmi les paramètres de processus température dans la plage de 273,15 à 1 273,15 K, en particulier dans la plage de 298,15 à 1 073,15 K, plus particulièrement à une température dans la plage de 373,15 à 873,15 K, et le paramètre de procédé pression dans la plage de 0,05 à 500 bara, en particulier dans la plage de 0,1 à 300 bara, plus particulièrement dans la plage de 1 à 250 bara.

15. Procédé d'étude de processus chimiques selon l'une des revendications 13 à 14, le procédé pouvant être mis en œuvre selon différentes configurations, les configurations étant choisies dans un groupe consistant en une configuration de criblage, un pilotage intégral de processus pour la réalisation de processus subséquents, et une configuration de conversion ascendante de l'échelle d'étapes individuelles du processus ou de conséquences d'étapes de processus et un retour de produit pour augmenter le rendement en produits, et/ou pour l'étude de membranes, les éléments réactifs (35) étant choisis dans un groupe consistant en des plaques multifonctionnelles sous forme de membranes, qui présentent une activité catalytique, de membranes comportant des composants catalytiquement actifs et de membranes à revêtement catalytique, ainsi que de membranes empilées, pour lesquelles chaque surface de membrane possède une certaine propriété.
